(19)

**Europäisches Patentamt**
**European Patent Office**
**Office européen des brevets**

(11) **EP 4 632 106 A1**

(12) **EUROPEAN PATENT APPLICATION**
published in accordance with Art. 153(4) EPC

(43) Date of publication:
**15.10.2025 Bulletin 2025/42**

(21) Application number: **22967749.7**

(22) Date of filing: **05.12.2022**

(51) International Patent Classification (IPC):
*C23F 11/12* (2006.01)     *C23F 11/173* (2006.01)

(52) Cooperative Patent Classification (CPC):
**C23F 11/12; C23F 11/173**

(86) International application number:
**PCT/JP2022/044725**

(87) International publication number:
**WO 2024/121895 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kurita Water Industries Ltd.**
**Tokyo 164-0001 (JP)**

(72) Inventors:
• **YOSHINO, Takanori**
**Tokyo 164-0001 (JP)**

• **SATO, Kenya**
**Tokyo 164-0001 (JP)**
• **WATANABE, Shuhei**
**Tokyo 164-0001 (JP)**
• **DISCI, Duygu**
**41751 Viersen (DE)**
• **STOBBE, Carsten**
**41751 Viersen (DE)**
• **WOLF, Florian**
**41751 Viersen (DE)**

(74) Representative: **TBK**
**Bavariaring 4-6**
**80336 München (DE)**

(54) **ANTI-CORROSION METAL TREATMENT METHOD FOR WATER SYSTEM**

(57)     Provided is a metal anticorrosion treatment method for a water system which can minimize or eliminate use of phosphorus compounds or metal salt compounds serving as loads on water environment, such as eutrophication or aquatic toxicity, and which is applicable in a water quality range as wide as possible. The present invention provides a metal anticorrosion treatment method for a water system, which uses a copolymer of a (meth) acrylic acid monomer and a sulfonic acid-containing monomer, and an anticorrosive organic acid compound having an organic acid corrosion-preventing effect index of 4 or more.

Fig. 1

## Description

Technical Field

The present invention relates to a metal anticorrosion treatment method for a water system, and the like.

Background Art

In water systems such as cooling water systems, metal members are often used in apparatuses, flow paths, and the like. Portions that come into contact with water, in the metal members disposed in water systems are susceptible to corrosion. For example, heat exchangers, reaction vessels, or pipes made of carbon steel, copper, galvanized steel, zinc, aluminum, aluminum alloy, stainless steel, or copper alloy undergo corrosion by contact with cooling water. In order to inhibit this corrosion, the metal members disposed in water systems, particularly, the portions that come into contact with water, are generally subjected to anticorrosion treatment, for example, by the addition of chemical agents to the water systems in operation.

For example, in order to suppress the corrosion of heat exchangers, reaction vessels, or pipes made of carbon steel, at least one phosphorus compound for anticorrosion selected from the group consisting of orthophosphate, hexametaphosphate, hydroxyethylidene diphosphonate, phosphonobutane tricarboxylate, and the like has conventionally been added to water systems such as cooling water systems. However, these phosphorus compounds used are causative materials of eutrophication in water environment. Therefore, each country or region has a system that regulates the discharge of phosphorus to the outside of water systems or natural environment. Hence, a great deal of care and cost are required for the handling of phosphorus compounds or wastewater treatment.

For example, PTL1 and PTL2 each propose a method for effectively suppressing the corrosion of a metal by minimizing such environmental problems.

PTL1 proposes a method for suppressing the corrosion of a metal, comprising adjusting water quality in an open circulation cooling water system so as to have a Langelier index of 1.5 or more and $[SiO_2] \times [CaH] \geq 2000$ [wherein $[SiO_2]$ represents a $SiO_2$ concentration (mg/L) in water, and [CaH] represents a calcium hardness (mg/L) as $CaCO_3$ in water] by elevating the degree of concentration of the cooling water, and subsequently adding a copolymer of one or more selected from the group consisting of maleic acid, maleic anhydride, and their water-soluble salts, and isobutylene, the copolymer having a molecular weight of 1000 to 20000.

PTL2 proposes a method for suppressing the corrosion of a metal that comes into contact with an aqueous solution system, comprising adding (A) a polyvalent metal ion and (B) a corrosion inhibitor or adhesion suppressor (DCA) compound to the aqueous solution system.

Citation List

Patent Literature

    PTL1: JP 04-033868 B
    PTL2: WO2010/062461

Summary of Invention

Technical Problem

The method proposed in PTL1 has a problem associated with anticorrosion, i.e., a narrow water quality range to which the method is applicable, such as limited application only to water quality having a calcium hardness and a silica concentration, both of which are high. The method proposed in PTL2, though exhibiting a favorable corrosion-preventing effect, since, for example, adding a small amount of a metal salt such as aluminum is needed, it is further required to reduce loads on water environment.

Accordingly, a main object of the present invention is to provide a metal anticorrosion treatment technique for a water system which can minimize or eliminate use of phosphorus compounds or metal salt compounds serving as loads on water environment, such as eutrophication or aquatic toxicity, and which is applicable in a water quality range as wide as possible.

Solution to Problem

The present inventors have conducted diligent studies and consequently found that a metal anticorrosion treatment technique for a water system which can minimize or eliminate use of phosphorus compounds or metal salt compounds serving as loads on water environment, such as eutrophication or aquatic toxicity, and which is applicable in a water quality range as wide as possible can be provided by combined use of an anticorrosive organic acid compound having an organic acid corrosion-preventing effect index of 4 or more, and a polymer in a water system. On the basis of this finding, the present invention has been completed as follows.

The present invention can provide a metal anticorrosion treatment method for a water system, which uses a copolymer of a (meth)acrylic acid monomer and a sulfonic acid-containing monomer, and an anticorrosive organic acid compound having an organic acid corrosion-preventing effect index of 4 or more.

The present invention can also provide a metal anticorrosion treatment agent for a water system, comprising a copolymer of a (meth)acrylic acid monomer and a sulfonic acid-containing monomer, and an anticorrosive organic acid compound having an organic acid corrosion-preventing effect index of 4 or more.

The present invention can also provide a metal anticorrosion treatment agent for a water system, comprising (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more.

The present invention can also provide a water treatment agent, comprising at least any of (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more, wherein (i) a combination of the component (A) and the component (C) or (ii) a combination of the components (A) to (C) is used when the water treatment agent is used in the metal anticorrosion treatment of a water system.

The present invention can also provide a water treatment agent, comprising an anticorrosive organic acid compound having an organic acid corrosion-preventing effect index of 4 or more, wherein the water treatment agent is used for enhancing the metal anticorrosion treatment of a water system (i) with a copolymer of a (meth)acrylic acid monomer and a sulfonic acid-containing monomer or (ii) with (a) a copolymer of a (meth)acrylic acid monomer and a sulfonic acid-containing monomer and (b) a dicarboxylic acid-based polymer.

The present invention can provide a method for enhancing the metal anticorrosion treatment of a water system (i) with a copolymer of a (meth)acrylic acid monomer and a sulfonic acid-containing monomer or (ii) with (a) a copolymer of a (meth)acrylic acid monomer and a sulfonic acid-containing monomer and (b) a dicarboxylic acid-based polymer, wherein the method uses an anticorrosive organic acid compound having an organic acid corrosion-preventing effect index of 4 or more.

Advantageous Effects of Invention

The present invention can provide a metal anticorrosion treatment technique for a water system which can minimize or eliminate use of phosphorus compounds or metal salt compounds serving as loads on water environment, such as eutrophication or aquatic toxicity, and which is applicable in a water quality range as wide as possible.

Brief Description of Drawing

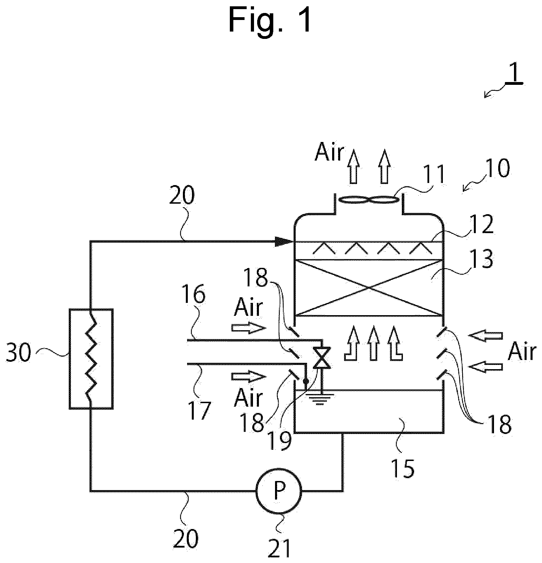

[Fig. 1] Fig. 1 is a schematic view showing one example of a water system for use in the method of the present embodiment, for example, a circulation cooling water system having a cooling tower. The present invention is not limited by this example.

Description of Embodiments

Hereinafter, preferred embodiments for carrying out the present invention will be described. The embodiments described below illustrate one example of typical embodiments of the present invention, and the scope of the present invention should not thereby be construed as limited. In the present specification, percentage is indicated by mass (mass/mass%) unless otherwise specified. The upper limit value (or less) and the lower limit value (or more) of each numeric range (indicated in the term "to") can be arbitrarily combined, if desired.

1. Metal anticorrosion treatment agent for water system according to present embodiment

The present embodiment can provide a metal anticorrosion treatment technique for a water system. The present embodiment can provide a metal anticorrosion treatment method for a water system, which uses a copolymer of a (meth)acrylic acid monomer and a sulfonic acid-containing monomer, and an anticorrosive organic acid compound having an organic acid corrosion-preventing effect index of 4 or more (hereinafter, also referred to as an "anticorrosive organic acid compound"). In a more preferred embodiment of the present embodiment, it is preferred to use three components, i.e., the copolymer of a (meth)acrylic acid monomer and a sulfonic acid-containing monomer, a dicarboxylic acid-based polymer, and the anticorrosive organic acid compound, in combination, from the viewpoint of exerting a more synergistic and excellent metal corrosion-preventing effect in a water system. In the present embodiment, it is preferred to add 5 mg/L or more each of the two components or the three components to the water system.

Another aspect of the present embodiment can provide a metal anticorrosion treatment method for a water system, which uses a copolymer of a (meth)acrylic acid monomer and a sulfonic acid-containing monomer, a dicarboxylic acid-based polymer, and an anticorrosive organic acid compound having an organic acid corrosion-preventing effect index of 4 or more.

The present embodiment can also provide a method for exerting a much better corrosion-preventing action or effect in a water system by using the anticorrosive organic acid compound and a polymer having a structural unit derived from a (meth)acrylic acid monomer and a structural unit derived from a monomer having sulfonic acid and/or a dicarboxylic acid-based polymer (more preferably a combination of these polymers).

The present embodiment can significantly reduce the usage amounts of phosphorus compounds or metal salt compounds serving as loads on water environment, such as eutrophication or aquatic toxicity, can minimize or eliminate use of these phosphorus compounds or metal salt compounds, and which is applicable in a water quality range as wide as possible. The present embodiment can further achieve scale suppression or scale prevention in a water system by using a (meth)acrylic acid-based polymer having a sulfone group and/or a dicarboxylic acid-based polymer as a polymer for combined use with the anticorrosive organic acid compound, and can be expected to contribute to maintaining the concentration of a corrosion inhibitor in a water system including a heat transfer surface.

The method according to the present embodiment may be a metal anticorrosion method for a water system, may be a scale prevention method for a water system, or may be a metal anticorrosion and scale prevention method for a water system. The metal anticorrosion treatment method for a water system may be a method for operating a water system, can thereby implement stable operation of a water system which can significantly reduce use of phosphorus compounds or metal salt compounds, and can also implement stable operation of a water system by minimizing or eliminating environmental pollution problems ascribable to use of phosphorus compounds or metal salt compounds. Furthermore, the metal anticorrosion treatment method for a water system exerts an excellent corrosion-preventing effect without using phosphorus compounds or metal salt compounds and as such, is applicable to a water system that performs phosphorus-free treatment or metal salt compound-free treatment, and eliminates the need of performing phosphorus treatment or metal salt compound treatment in this water system. As mentioned above, the method of the present embodiment enables metal corrosion of a water system to be effectively suppressed by minimizing or reducing environmental pollution problems, and can therefore contribute to stable operation of the water system.

Hereinafter, the present embodiment will be described in detail.

1-1. Subject of metal anticorrosion in water system

In the present embodiment, the subject of anticorrosion is not particularly limited and is a metallic material. Examples of the metallic material include one or two or more selected from the group consisting of carbon steel, copper, galvanized steel, zinc, aluminum, aluminum alloy, stainless steel, and alloy thereof. The metallic material is preferably an iron-based material. Examples of the iron-based material include general iron materials (e.g., pure iron, carbon steel, and cast iron). The iron-based material is more preferably a carbon steel material that is often used in, for example, a carbon steel tube for a boiler or a heat exchanger (e.g., a STB steel tube). As for the carbon steel material, JIS G 0203 reports that the range of carbon steel is a range with a carbon content of 0.02% by mass to approximately 2% by mass. More specifically, carbon steel having a carbon content of 0.25% by mass or less is called low-carbon steel, carbon steel having a carbon content of 0.25 to 0.6% by mass is called medium-carbon steel, and carbon steel having a carbon content of 0.6% by mass or more is called high-carbon steel. Since the low-carbon steel to the medium-carbon steel are widely used, carbon steel having a carbon content of 0.6% by mass or less is also called common steel. The cast iron reportedly has a carbon content of more than 2% by mass. In the present embodiment, a more favorable corrosion-preventing effect can be exerted on common steel, low-carbon steel, and medium-carbon steel, further preferably low-carbon steel, among them.

The subject of anticorrosion treatment to which the present embodiment is preferably applied is preferably a metallic material that comes into contact with water or a metal member using a metallic material that comes into contact with water.

Examples of a location or an apparatus where the metallic material or the metal member is used in a water system include various piping or pipes such as water supply pipes, pumps, flow paths, heat exchangers, freezers, reaction vessels, and compressors. One or two or more selected from the group consisting thereof may be used. More specifically, any of these members or metallic components or portions contained therein are the subject of anticorrosion treatment to which the present embodiment is preferably applied.

1-2. Polymer

The polymer used in the present embodiment is not particularly limited and is preferably an organic high molecular weight compound that can be used in a water system. The polymer used in the present embodiment may be a polymer obtained from the same monomer or may be a copolymer obtained using different monomers. The polymer used in the present embodiment may be obtained by appropriately adopting a known production method such as an organic solvent system polymerization method or a water system polymerization method, or a commercially available product may be used. The form of the salt of the polymer is not particularly limited and is preferably a salt that can convert a monomer or a polymer to a water-soluble salt. Examples thereof include alkali metal salts from sodium or potassium, alkaline earth metal salts from calcium or magnesium, and ammonium salts from ammonium or primary to tertiary amine. One or two or more selected from the group consisting thereof can be used.

The polymer used in the present embodiment is preferably a polymer that further enhances a corrosion-preventing effect by combined use with the anticorrosive organic acid compound mentioned later, as compared with before combined use. For example, a corrosion rate (mm/y) can be used as an index for determining the preferred polymer used in the present embodiment. The corrosion rate (mm/y) is preferably less than 0.11, more preferably 0.10 or less, further preferably 0.08 or less, more preferably 0.06 or less. A more favorable corrosion-preventing action can thereby be obtained in combined use with the anticorrosive organic acid compound.

Examples of the polymer include (meth)acrylic acid-based polymers (e.g., (meth)acrylic acid-based polymers having a sulfone group) and dicarboxylic acid-based polymers (e.g., maleic acid-based polymers). One or two or more selected from the group consisting thereof can be used.. The polymer is preferably a (meth)acrylic acid-based polymer (preferably a (meth)acrylic acid-based polymer having a sulfone group) and/or a dicarboxylic acid-based polymer (preferably a maleic acid-based polymer and/or an epoxysuccinic acid-based polymer), further preferably a combination of a (meth)acrylic acid-based polymer and a dicarboxylic acid-based polymer. A more favorable corrosion-preventing effect can be exerted by combined use of these two polymers. A more favorable corrosion-preventing action can thereby be obtained in combined use with the anticorrosive organic acid compound. The (meth)acrylic acid-based polymer having a sulfone group (more preferably an acrylic acid-based polymer having a sulfone group) in combined use with the anticorrosive organic acid compound and/or combined use with a different polymer can more favorably exert a scale-suppressing action on a heat transfer surface, and can more favorably reduce the turbidity of water in a water system.

1-2-1. (Meth)acrylic acid-based polymer

The polymer used in the present embodiment is preferably a (meth)acrylic acid-based polymer, more preferably a (meth)acrylic acid-based copolymer, and, more specifically, is preferably a copolymer of a (meth)acrylic acid monomer and a monomer containing a sulfone group, further preferably a copolymer of a (meth)acrylic acid monomer and a monomer containing an amide group and a sulfone group and/or a copolymer of a (meth)acrylic acid monomer and a monomer containing a hydroxy group and a sulfone group. A more favorable corrosion-preventing action can thereby be obtained in combined use with the anticorrosive organic acid compound. The monomer ratio (molar ratio (% by mol) between the (meth)acrylic acid monomer and the monomer containing a sulfone group in the (meth)acrylic acid-based copolymer is preferably 99 to 1:1 to 99. The (meth)acrylic acid-based copolymer preferably has a low molecular weight. The (meth)acrylic acid-based polymer may be a water-soluble salt, and the salt can appropriately adopt the salt described above in the polymer.

<(Meth)acrylic acid monomer>

Examples of the (meth)acrylic acid monomer include, but are not particularly limited to, (meth)acrylic acid and salts thereof. One or two or more selected from the group consisting thereof can be used. In the present embodiment, the "(meth)acrylic acid" means at least one member selected from the group consisting of "acrylic acid" and "methacrylic acid". Among them, acrylic acid or a salt thereof is preferred. The (meth)acrylic acid monomer used in the present embodiment, when containing a sulfone group, is preferably used as <Sulfonic acid monomer> mentioned later. In this case, the (meth)acrylic acid monomer is desirably a (meth)acrylic acid monomer other than the "(meth)acrylic acid monomer containing a sulfone group".

<Sulfonic acid monomer>

The sulfonic acid monomer is not particularly limited and is preferably a monomer containing a sulfone group, from the viewpoint of exerting a more favorable corrosion-preventing effect. The monomer is further preferably an unsaturated monomer. Examples of the sulfonic acid monomer include, but are not limited to, monoethylenic unsaturated sulfonic acid monomers. The monoethylenic unsaturated sulfonic acid monomer may be in the form of a salt (e.g., a Na salt).

Examples of the sulfonic acid monomer include monomers having an amide group and a sulfone group (preferably having 6 to 9 carbon atoms), monomers having a hydroxy group and a sulfone group (preferably having 6 to 9 carbon atoms), sulfonation products of aliphatic conjugated diene (preferably having 4 to 15 carbon atoms), and their salts. One or two or more selected from the group consisting thereof can be used. Among them, a monomer having an amide group and a sulfone group (preferably having 6 to 9 carbon atoms) and/or a monomer having a hydroxy group and a sulfone group (preferably having 6 to 9 carbon atoms) is preferred. The "sulfone group" of the monomer may be a sulfone group optionally having a substituent. Examples thereof include alkylsulfone groups. The "alkyl" of the alkylsulfone group preferably has 1 to 8 carbon atoms, and a methylpropanesulfone group (also called tert-butylsulfone group) is more preferred. A more favorable corrosion-preventing action and a more favorable scale-preventing action can thereby be obtained in combined use with the anticorrosive organic acid compound.

Examples of the monomer having an amide group and a sulfone group include (meth)acrylamidoalkylpropanesulfonic acid and crotonamidoalkylpropanesulfonic acid and more specifically include 2-acrylamido-2-methylpropanesulfonic acid (AMPS), 3-acrylamido-3,3-dimethylpropanesulfonic acid, and their salts. One or two or more selected from the group consisting thereof can be used.

Examples of the monomer having a hydroxy group and a sulfone group include 3-allyloxy-2-hydroxy-1-propanesulfonic acid (HAPS), 3-methacryloxy-2-hydroxypropanesulfonic acid, 3-allyloxy-1-hydroxypropane-2-sulfonic acid, 3-methacryloxy-1-hydroxypropane-2-sulfonic acid, and their salts. One or two or more selected from the group consisting thereof can be used.

Examples of the sulfonation product of aliphatic conjugated diene include sulfonation products of 1,3-butadiene and sulfonation products of 2,3-dimethyl-1,3-butadiene. One or two or more selected from the group consisting thereof can be used.

More preferred examples of the sulfonic acid monomer include unsaturated monomers containing a sulfone group, such as (meth)acrylamidomethylpropanesulfonic acid, 3-allyloxy-2-hydroxypropanesulfonic acid, (meth)allylsulfonic acid, vinylsulfonic acid, styrenesulfonic acid, and 2-sulfoethyl methacrylate, and their salts. One or two or more selected from the group consisting thereof can be used. Among them, at least one monomer selected from the group consisting of 2-acrylamido-2-methylpropanesulfonic acid (AMPS) and 3-allyloxy-2-hydroxypropanesulfonic acid (HAPS) is preferred, and AMPS and/or HAPS is more preferred. A more favorable corrosion-preventing action and a more favorable scale-preventing action can thereby be obtained in combined use with the anticorrosive organic acid compound.

Examples of monomers other than those described above include: N-vinyl monomers such as N-vinylpyrrolidone, N-vinylformamide, N-vinylacetamide, N-vinyl-N-methylformamide, N-vinyl-methylacetamide, and N-vinyloxazolidone; nitrogen-containing nonionic unsaturated monomers such as (meth)acrylamide, t-butylacrylamide, N,N-dimethylacrylamide, and N-isopropylacrylamide; hydroxy group-containing unsaturated monomers such as 3-(meth)-allyloxy-1,2-dihydroxypropane, (meth)allyl alcohol, and isoprenol; polyoxyethylene group-containing unsaturated monomers such as compounds obtained by adding approximately 1 to 200 mol of ethylene oxide to (meth)allyl alcohol; (meth)acrylic acid ester such as methyl (meth)acrylate, ethyl (meth)acrylate, butyl (meth)acrylate, and hydroxyethyl (meth)acrylate; unsaturated carboxylic acid monomers such as dicarboxylic acid and itaconic acid; and aromatic unsaturated monomers such as styrene. One or two or more selected from the group consisting thereof can be used.

<Preferred (meth)acrylic acid-based polymer>

The (meth)acrylic acid-based polymer is more preferably a (meth)acrylic acid-based polymer containing a sulfone group in a molecule, further preferably a (meth)acrylic acid-based polymer containing a sulfonic acid group in a molecule, more preferably a copolymer of a (meth)acrylic acid monomer and a sulfonic acid monomer. The sulfonic acid monomer is preferably a sulfonic acid group-containing unsaturated monomer. More preferred specific examples thereof include homopolymers or copolymers obtained by polymerizing or copolymerizing one or two or more selected from the group consisting of (meth)acrylic acid (preferably acrylic acid (AA)), 2-hydroxy-3-(allyloxy)-1-propanesulfonic acid (HAPS), and 2-acrylamido-2-methylpropanesulfonic acid (AMPS).

<Production example of (meth)acrylic acid-based copolymer>

The (meth)acrylic acid-based copolymer can be produced by a known production method. The copolymer is preferably a polymer prepared by copolymerizing (i) a (meth)acrylic acid monomer and (ii) a sulfonic acid monomer selected from the group consisting of a monomer having an amide group and a sulfone group, a monomer having a hydroxy group and a sulfone group, and the like, at a predetermined mass usage ratio. An arbitrary monomer may be used without impairing the advantageous effects of the present invention.

The (meth)acrylic acid-based copolymer is more preferably a polymer prepared by copolymerizing (i) an acrylic acid monomer and (ii) at least one sulfonic acid monomer selected from the group consisting of 2-acrylamido-2-methylpropanesulfonic acid, 3-allyloxy-2-hydroxypropanesulfonic acid, and the like at a predetermined mass usage ratio.

The (meth)acrylic acid-based copolymer is still more preferably one or two or more selected from the group consisting of a copolymer of an acrylic acid (AA) monomer and a 2-acrylamido-2-methylpropanesulfonic acid (AMPS) monomer, a copolymer of an acrylic acid (AA) monomer and a 3-allyloxy-2-hydroxypropanesulfonic acid (HAPS) monomer, and the like. The predetermined molar ratio between the (meth)acrylic acid monomer and the sulfonic acid monomer is preferably, for example, 1 to 99:99 to 1. The molar ratio can appropriately adopt <Molar ratio (% by mol) in (meth)acrylic acid-based copolymer> mentioned later.

<Molar ratio (% by mol) between (meth)acrylic acid monomer and sulfonic acid monomer>

The molar ratio (% by mol: 100 in total) between the (meth)acrylic acid monomer and the sulfonic acid monomer in the copolymer of the (meth)acrylic acid monomer and the sulfonic acid monomer is not particularly limited. The preferred lower limit value of the (meth)acrylic acid monomer is preferably 50 or more, more preferably 60 or more, more preferably 70 or more, more preferably 75 or more, more preferably 80 or more. The preferred upper limit value of the (meth)acrylic acid monomer is preferably 99 or less, more preferably 98 or less, further preferably 97 or less, more preferably 95 or less, still further preferably 90 or less. The more preferred numeric range of the molar ratio between the acrylic acid monomer and the sulfonic acid monomer is acrylic acid monomer:sulfonic acid monomer of more preferably 75:25 to 93:7, further preferably 80:20 to 90:10. The copolymer of the (meth)acrylic acid monomer and the sulfonic acid monomer has the molar ratio, whereby a more favorable corrosion-preventing effect and a more favorable scale-preventing effect can be exerted. The molar ratio may be appropriately adopted to the molar ratio (%) between a (meth)acrylic acid monomer and a sulfonic acid monomer constituting a copolymer such as an AA/AMPS-based polymer or an AA/HAPS-based polymer mentioned later.

In a more preferred embodiment of the molar ratio in the (meth)acrylic acid-based copolymer, the molar ratio (% by mol) between a (meth)acrylic acid monomer and a sulfonic acid monomer containing an amide group and/or a hydroxy group in a copolymer of the (meth)acrylic acid monomer and the sulfonic acid monomer containing an amide group and/or a hydroxy group is more preferably 75:25 to 93:7, further preferably 80:20 to 90:10. The molar ratio is attained, whereby a more favorable corrosion-preventing effect can be exerted. The molar ratio can appropriately adopt the preferred lower limit value and the preferred upper limit value of <Molar ratio in copolymer of (meth)acrylic acid monomer and sulfonic acid monomer> mentioned above.

In a more preferred embodiment of the molar ratio in the (meth)acrylic acid-based copolymer, the AA/AMPS ratio or the AA/HAPS ratio (% by mol) (AA:AMPS or HAPS) of an AA/AMPS-based polymer or an AA/HAPS-based polymer is more preferably 75:25 to 93:7, further preferably 80:20 to 90:10. The molar ratio is attained, whereby a more favorable corrosion-preventing effect can be exerted. The molar ratio can appropriately adopt the preferred lower limit value and the preferred upper limit value of <Molar ratio in the copolymer of (meth)acrylic acid monomer and sulfonic acid monomer> mentioned above.

<Weight average molecular weight of (meth)acrylic acid-based copolymer>

The weight average molecular weight of the copolymer of a (meth)acrylic acid monomer and a sulfonic acid monomer determined by GPC is not particularly limited. The preferred lower limit value thereof is preferably 500 or more, more preferably 1,000 or more, further preferably 2,000 or more, more preferably 3,000 or more, further preferably 4,000 or more. The preferred upper limit value thereof is preferably 100,000 or less, more preferably 50,000 or less, further preferably 40,000 or less, more preferably 30,000 or less, more preferably 20,000 or less. The preferred numeric range of of the copolymer a (meth)acrylic acid monomer and a sulfonic acid monomer is more preferably 3,000 to 30,000, preferably 4,000 to 20,000. The preferred weight average molecular weight of an AA/AMPS-based polymer or an AA/HAPS-based polymer can appropriately adopt the preferred lower limit value and upper limit value mentioned above. The preferred numeric range is preferably 3,000 to 30,000, more preferably 4,000 to 20,000. The weight average molecular weight is adjusted thereto, whereby a more favorable corrosion-preventing effect and scale-preventing effect can be exerted.

In the present specification, the weight average molecular weight of a polymer can be obtained by gel permeation chromatography (GPC analysis) using a standard material. In the case of using sodium polyacrylate as a standard material, the weight average molecular weight can be indicated by a value based on sodium polyacrylate.

1-2-2. Dicarboxylic acid-based polymer

The polymer used in the present embodiment is preferably a dicarboxylic acid-based polymer, more preferably a maleic acid-based polymer, and, more specifically, is preferably a polymer of a maleic acid monomer or a copolymer of a maleic acid monomer and an additional monomer (e.g., an aromatic unsaturated monomer or an unsaturated hydrocarbon monomer), further preferably a polymer of a maleic acid monomer or a copolymer of a maleic acid monomer and an unsaturated hydrocarbon monomer (preferably an isobutylene monomer). A more favorable corrosion-preventing action and scale-preventing action can thereby be obtained in combined use with the anticorrosive organic acid compound.

<Dicarboxylic acid-based polymer and production example thereof>

The dicarboxylic acid-based polymer (homopolymer or copolymer) can be produced by a known production method. The copolymer is preferably a polymer prepared by polymerizing (i) a maleic acid monomer and (ii) a monomer having an unsaturated bond, selected from the group consisting of an aromatic unsaturated monomer such as styrene, an unsaturated hydrocarbon monomer such as isobutylene, and the like, at a predetermined mass usage ratio. An arbitrary monomer may be used without impairing the advantageous effects of the present invention.

Examples of the dicarboxylic acid-based polymer include: polymers (homopolymers and copolymers) obtained by polymerizing one or two or more dicarboxylic acid monomers selected from the group consisting of maleic acid (or anhydride), epoxysuccinic acid, itaconic acid, and the like in an aqueous solution containing these monomers; and polymers (copolymers) obtained by polymerizing a carboxylic acid monomer and a monomer having an unsaturated bond other than the monomer in an aqueous solution optionally containing the monomer having an unsaturated bond other than the dicarboxylic acid monomer. One or two or more selected from the group consisting thereof can be used.

Examples of the dicarboxylic acid monomer include, but are not particularly limited to, organic acid-based monomers such as maleic acid-based monomers, epoxysuccinic acid monomers, and itaconic acid monomers, and their ester monomers. An unsaturated organic acid-based monomer and its esters are preferred. One or two or more selected from the group consisting thereof can be used.

Examples of the monomer having an unsaturated bond other than the dicarboxylic acid monomer include, but are not particularly limited to: N-vinyl monomers such as N-vinylpyrrolidone, N-vinylformamide, N-vinylacetamide, N-vinyl-N-methylformamide, N-vinyl-methylacetamide, and N-vinyloxazolidone; nitrogen-containing nonionic unsaturated monomers such as (meth)acrylamide, t-butylacrylamide, N,N-dimethylacrylamide, and N-isopropylacrylamide; hydroxy group-containing unsaturated monomers such as 3-(meth)-allyloxy-1,2-dihydroxypropane, (meth)allyl alcohol, and isoprenol; polyoxyethylene group-containing unsaturated monomers such as compounds obtained by adding approximately 1 to 200 mol of ethylene oxide to (meth)allyl alcohol; (meth)acrylic acid ester such as methyl (meth)acrylate, ethyl (meth)acrylate, butyl (meth)acrylate, and hydroxyethyl (meth)acrylate; unsaturated carboxylic acid monomers such as (meth)acrylic acid and itaconic acid; aromatic unsaturated monomers such as styrene; and unsaturated hydrocarbon such as isobutylene. One or two or more selected from the group consisting thereof can be used.

The dicarboxylic acid-based polymer is more preferably one or two or more selected from the group consisting of a maleic acid-based polymer, an epoxysuccinic acid-based polymer (preferably an epoxysuccinic acid homopolymer), and an itaconic acid-based polymer, further preferably a maleic acid-based polymer and/or an epoxysuccinic acid-based polymer, still further preferably a maleic acid-based polymer.

The weight average molecular weight of the dicarboxylic acid-based polymer is not particularly limited and, more specifically, is more preferably 250 or 500 to 10,000, more preferably 500 to 5,000, more preferably 500 to 3,000, more preferably 500 to 2,000. In the present specification, the weight average molecular weight of a polymer can be obtained by gel permeation chromatography (GPC analysis) using a standard material. In the case of using sodium polyacrylate as a standard material, the weight average molecular weight can be indicated by a value based on sodium polyacrylate.

1-2-2-1. Maleic acid-based polymer

The dicarboxylic acid-based polymer is preferably a maleic acid-based polymer. The maleic acid-based polymer is preferably a polymer comprising a maleic acid-based monomer as a structural unit. The maleic acid-based polymer may be a homopolymer or a copolymer. Examples of the homopolymer include polymaleic acid obtained by polymerizing a maleic acid-based monomer, for example, consisting of a maleic acid monomer. Examples of the copolymer include, but are not particularly limited to, copolymers of a maleic acid-based monomer and an additional monomer (unsaturated monomer) copolymerizable therewith. The maleic acid-based polymer may be a water-soluble salt, and the salt can appropriately adopt the salt described above in the polymer.

<Maleic acid-based monomer>

Examples of the maleic acid-based monomer include, but are not particularly limited to, maleic acid monomers (e.g., maleic anhydride, maleic acid, and maleate) and maleic acid ester monomers. One or two or more selected from the group consisting thereof can be used.

The maleic acid-based monomer is preferably a maleic acid monomer. The maleic anhydride-based monomer includes maleic anhydride and a hydrolysate of maleic anhydride (maleic acid).

Examples of the maleic acid ester include esterification products with alcohols of saturated hydrocarbon such as methanol and ethanol, alcohols of unsaturated hydrocarbon such as allyl alcohol and methallyl alcohol, or polyalkylene glycol derivatives such as polyalkylene alcohol, polyoxyalkylene monomethyl ether, and polyoxyalkylene monoallyl ether. One or two or more selected from the group consisting thereof can be used.

<Copolymerizable monomer other than maleic acid-based monomer>

The copolymerizable monomer other than the maleic acid-based monomer is not particularly limited and can appropriately adopt an exemplary compound or the like described in the "monomer having an unsaturated bond other than the dicarboxylic acid monomer" mentioned above. The monomer copolymerizable with the maleic acid-based monomer is preferably an unsaturated hydrocarbon monomer (preferably an ethylenic unsaturated hydrocarbon monomer). The unsaturated hydrocarbon monomer may be in a chain or cyclic form. A monoethylenic unsaturated hydrocarbon monomer is preferred and preferably has 4 to 6 carbon atoms. The copolymerizable monomer is preferably a chain monoethylenic unsaturated hydrocarbon monomer. The chain monoethylenic unsaturated hydrocarbon monomer is more preferably a butylene (butene) monomer, further preferably an isobutylene monomer. A more favorable corrosion-preventing action can thereby be obtained in combined use with the anticorrosive organic acid compound.

Examples of the monoethylenic unsaturated hydrocarbon having 4 to 6 carbon atoms as the monomer copolymerizable with the maleic acid-based monomer include: chain monoethylenic unsaturated hydrocarbon such as butylene (isobutylene (isobutene), α-butylene (1-butene), cis-β-butylene (cis-2-butene), and trans-β-butylene (trans-2-butene)), 1-pentene, 2-pentene, methylbutene, methylpentene, and hexene; and cyclic monoethylenic unsaturated hydrocarbon such as cyclopentene, methylcyclopentene, and cyclohexene. One or two or more selected from the group consisting thereof can be used. A more favorable corrosion-preventing action can thereby be obtained in combined use with the anticorrosive organic acid compound.

<Preferred maleic acid-based polymer>

The maleic acid-based polymer is preferably a copolymer of a maleic acid monomer and a monoethylenic unsaturated hydrocarbon monomer (preferably an isobutylene monomer) and/or polymaleic acid (preferably a homopolymer of a maleic acid monomer). A more favorable corrosion-preventing action can thereby be obtained in combined use with the anticorrosive organic acid compound.

<Molar ratio (% by mol) between maleic acid monomer and monomer other therethan>

The molar ratio (% by mol: 100 in total) between the maleic acid monomer and the monomer other therethan in the maleic acid-based polymer is not particularly limited. The preferred lower limit value of the maleic acid monomer is preferably 50% or more, more preferably 60% or more, more preferably 70% or more.

In a more preferred embodiment of the molar ratio in the maleic acid-based copolymer, the molar ratio (% by mol: 100 in total) between a maleic acid monomer and a monoethylenic unsaturated hydrocarbon (preferably having 4 to 6 carbon atoms) monomer is not particularly limited. The preferred lower limit value of the maleic acid monomer is preferably 50 or more, more preferably 60 or more, more preferably 70 or more.

<Weight average molecular weight of maleic acid-based polymer>

The weight average molecular weight of the maleic acid-based polymer determined by GPC is not particularly limited. The preferred lower limit value thereof is preferably 250 or more, more preferably 500 or more. The preferred upper limit value thereof is preferably 10,000 or less, more preferably 8,000 or less, further preferably 5,000 or less, more preferably 3,000 or less. The preferred numeric range is preferably 500 to 5,000, more preferably 500 to 3,000. A more favorable corrosion-preventing action and a more favorable scale-preventing action can thereby be obtained in combined use with the anticorrosive organic acid compound.

1-3. Anticorrosive organic acid compound

The anticorrosive organic acid compound used in the present embodiment is not particularly limited and is preferably an organic acid compound having a corrosion-preventing action on a metallic material that comes into contact with water.

As for an index that indicates the corrosion-preventing effect of the organic acid of the anticorrosive organic acid compound used in the present embodiment (hereinafter, also referred to as an "organic acid corrosion-preventing effect index"), the more preferred lower limit value is preferably 4 or more, more preferably 4.5 or more, further preferably 5 or more, from the viewpoint of exerting a more favorable corrosion-preventing action. The more preferred upper limit value is not particularly limited and is preferably 20 or less, more preferably 18 or less, further preferably 15 or less, more preferably 14 or less. The preferred numeric range is more preferably 4 to 15. A more favorable corrosion-preventing action can thereby be obtained in combined use with the polymer. The organic acid corrosion-preventing effect index can be determined according to the expression of <Organic acid corrosion-preventing effect index> shown in [Examples] described later.

It is preferred to determine whether the anticorrosive organic acid compound has an organic acid corrosion-preventing effect index capable of exerting a corrosion-preventing effect, for example, in consideration of a slower corrosion rate of test water containing the organic acid and the polymer or a corrosion rate that falls within a set numeric range.

More preferably, whether to be an organic acid corrosion-preventing effect index capable of exerting a corrosion-preventing effect can be determined using <Approach> and the calculation expression of the corrosion rate (mm/y) described in Test Example 1 in [Examples] described later. The corrosion rate (mm/y) at which being capable of exerting a corrosion-preventing effect can be determined is preferably less than 0.10, more preferably 0.08 or less, further preferably 0.05 or less, more preferably 0.03 or less. For example, the organic acid corrosion-preventing effect index of the anticorrosive organic acid compound with a corrosion rate in the range of 0.03 or less can be regarded as an index that produces a corrosion-preventing effect.

The anticorrosive organic acid compound preferably has a hydroxy group and/or a carboxylic acid group, more preferably a hydroxy group and a carboxylic acid group, as a functional group.

The number of hydroxy groups carried by the anticorrosive organic acid compound is not particularly limited and may be one or more. The preferred lower limit value thereof is preferably 0 or 1 or more. A more favorable corrosion-preventing action can thereby be obtained in combined use with the polymer. The number of carboxylic acid groups carried by the anticorrosive organic acid compound is not particularly limited and may be one or more. The preferred lower limit value thereof is preferably 1 or more, more preferably 2 or more. A more favorable corrosion-preventing action can thereby be obtained in combined use with the polymer. At least one or more carboxylic acid groups are important. Larger numbers of hydroxy groups and carboxylic acid groups are considered favorable for exerting the working effects of the present embodiment. The anticorrosive organic acid compound has at least one or more carboxylic acid groups, and the total number of carboxylic acid groups and hydroxy groups is preferably 4 or more, more preferably 5 or more, further preferably 6 or more. The upper limit value of the number of intramolecular carboxylic acid groups and/or hydroxy groups carried by the anticorrosive organic acid compound is not particularly limited and may be controlled by a molecular weight.

The molecular weight (M.W.) of the anticorrosive organic acid compound is not particularly limited. The preferred lower limit value thereof is preferably 100 or more, more preferably 125 or more, further preferably 150 or more. The preferred upper limit value thereof is not particularly limited and is preferably 300 or less, more preferably 290 or less. A more favorable corrosion-preventing action can thereby be obtained in combined use with the polymer.

Examples of the anticorrosive organic acid compound include, but are not limited to, citric acid, tartaric acid, mucic acid, glucoheptonic acid, butanetetracarboxylic acid, iminodimalic acid, and 3-hydroxy-2,2'-iminodisuccinic acid. One or two or more selected from the group consisting thereof can be used. A more favorable corrosion-preventing action can thereby be obtained in combined use with the polymer. Among them, iminodimalic acid is more preferred from the viewpoint of a more favorable corrosion-preventing action and a more favorable scale-preventing action by combined use with the polymer.

1-4. Combined use of polymer and anticorrosive organic acid compound, and preferred usage amount and preferred usage ratio of each component

In the present embodiment, the polymer and the anticorrosive organic acid compound are used in an anticorrosion treatment method for a water system for suppressing the corrosion of a metal that comes into contact with the water system, and these components are allowed to exist in the water system, whereby a more favorable metal corrosion-preventing effect can be exerted. Hereinafter, a more preferred usage amount of each component in a water system or a content ratio thereof in a chemical agent, a blending ratio, and the like will be described.

An alternative aspect of the present embodiment can also provide a technique of reinforcing, enhancing, or improving a metal corrosion-preventing effect ascribable to the polymer present in a water system by combined use of the polymer and the anticorrosive organic acid compound in the water system. Hereinafter, a more favorable mass usage ratio or a mass content ratio in a chemical agent will be described.

<Preferred usage amounts or addition amounts of polymer and anticorrosive organic acid compound>

The usage amount or the addition amount (mg solid/L; hereinafter, referred to as "mg/L") of the polymer to the water system is not particularly limited. The preferred lower limit value is preferably 1 mg/L or more, further preferably 2 mg/L or more, more preferably 3 mg or 4 mg/L or more, more preferably 5 mg/L or more, more preferably 6 mg/L or more, more preferably 7 mg/L or more, more preferably 8 mg/L or more. The preferred upper limit value is not particularly limited and is preferably 100 mg/L or less, more preferably 50 mg/L or less, further preferably 40 mg/L or less, more preferably 30 mg/L or less, further preferably 20 mg/L or less, from the viewpoint of reducing environmental impacts and cost.

The usage amount or the addition amount (mg solid/L; hereinafter, referred to as "mg/L") of the (meth)acrylic acid-based polymer to the water system is not particularly limited. The preferred lower limit value is preferably 1 mg/L or more, further preferably 2 mg/L or more, more preferably 3 mg or 4 mg/L or more, more preferably 5 mg/L or more, more preferably 6 mg/L or more, more preferably 7 mg/L or more, more preferably 8 mg/L or more. The preferred upper limit value is not particularly limited and is preferably 100 mg/L or less, more preferably 50 mg/L or less, further preferably 40 mg/L or less, more preferably 30 mg/L or less, further preferably 20 mg/L or less, from the viewpoint of reducing environmental impacts and cost.

In a still more preferred embodiment, the usage amount or the addition amount (mg solid/L) of the (meth)acrylic acid-based polymer containing a sulfone group to the water system can appropriately adopt the preferred lower limit value and upper limit value of the usage amount or the like of the (meth)acrylic acid-based polymer mentioned above. The more preferred numeric range is more preferably 3 to 50 mg/L, further preferably 5 to 20 mg/L. In a still more preferred embodiment, the usage amount (mg solid/L) of the AA/AMPS-based polymer and/or the AA/HAPS-based polymer to the water system can appropriately adopt the preferred lower limit value and upper limit value of the usage amount of the (meth)acrylic acid-based polymer mentioned above. The more preferred numeric range is more preferably 3 to 50 mg/L, further preferably 5 to 20 mg/L.

The usage amount or the addition amount (mg solid/L; hereinafter, referred to as "mg/L") of the dicarboxylic acid-based polymer to the water system is not particularly limited. The preferred lower limit value is preferably 1 mg/L or more, further preferably 2 mg/L or more, more preferably 3 mg or 4 mg/L or more, more preferably 5 mg/L or more, more preferably 6 mg/L or more, more preferably 7 mg/L or more, more preferably 8 mg/L or more. The preferred upper limit value is not particularly limited and is preferably 100 mg/L or less, more preferably 50 mg/L or less, further preferably 40 mg/L or less, more preferably 30 mg/L or less, further preferably 20 mg/L or less, from the viewpoint of reducing environmental impacts and cost.

In a still more preferred embodiment, the usage amount or the addition amount (mg solid/L) of the maleic acid-based polymer to the water system can appropriately adopt the preferred lower limit value and upper limit value of the usage amount or the like of the maleic acid-based polymer mentioned above. The more preferred numeric range is more preferably 3 to 50 mg/L, further preferably 5 to 20 mg/L. In a still more preferred embodiment, the usage amount (mg solid/L) of the MA monopolymer and/or the MA/IB-based polymer to the water system can appropriately adopt the preferred lower limit value and upper limit value of the usage amount of the maleic acid-based polymer mentioned above. The more preferred numeric range is more preferably 3 to 50 mg/L, further preferably 5 to 20 mg/L.

In the present embodiment, in the case of using polymers of different lineages in a water system, for example, combined use of a (meth)acrylic acid-based polymer having a sulfone group and a dicarboxylic acid-based polymer, the usage amount or the like of the polymer mentioned above can be regarded as each usage amount. In the case of using a plurality of such polymers of different lineages, the total usage amount or the total addition amount of the polymers is not particularly limited. The preferred lower limit value is preferably 6 mg/L or more, more preferably 8 mg/L or more, further preferably 10 mg/L or more, more preferably 12 mg/L or more, more preferably 14 mg/L or more, more preferably 16 mg/L or more. The preferred upper limit value is not particularly limited and is preferably 200 mg/L or less, more preferably 100 mg/L or less, further preferably 80 mg/L, 60 mg/L or 40 mg/L or less, from the viewpoint of reducing environmental impacts and cost.

In the present embodiment, in the case of combined use of a (meth)acrylic acid-based polymer having a sulfone group and a dicarboxylic acid-based polymer in a water system, the usage ratio in the water system or the blending ratio in a chemical agent therebetween is not particularly limited and may be determined by appropriately combining their respective usage amounts or addition amounts (mg/L) mentioned above to the water system. The preferred range of the usage ratio or the blending ratio is preferably 3 to 50:30 to 3, more preferably 5 to 20:20 to 5. Examples of the combination include, but are not limited to, combinations of the AA/AMPS-based polymer and/or the AA/HAPS-based polymer and the MA-based monopolymer and/or the MA/IB-based polymer.

The usage amount or the addition amount (mg solid/L; hereinafter, referred to as "mg/L") of the anticorrosive organic acid compound to the water system is not particularly limited. The preferred lower limit value is preferably 1 mg/L or more, more preferably 2 mg/L or more, further preferably 3 mg or 4 mg/L or more, more preferably 5 mg/L or more, more preferably 6 mg/L or more, more preferably 7 mg/L or more, more preferably 8 mg/L or more. The preferred upper limit value is not particularly limited and is preferably 100 mg/L or less, more preferably 50 mg/L or less, further preferably 40 mg/L or less, more preferably 30 mg/L or less, further preferably 20 mg/L or less, from the viewpoint of reducing environmental impacts and cost.

The usage amount or the addition amount (mg solid/L; hereinafter, referred to as "mg/L") of iminodimalic acid to the water system is not particularly limited and can appropriately adopt the preferred lower limit value and upper limit value of the usage amount or the like of the anticorrosive organic acid compound mentioned above. The more preferred numeric range is more preferably 3 to 50 mg/L, further preferably 5 to 20 mg/L.

In the case of combined use of the polymer and the anticorrosive organic acid compound in a water system, the usage ratio in the water system or the blending ratio in a chemical agent therebetween is not particularly limited and may be determined by appropriately combining the respective usage amounts or addition amounts (mg/L) of the polymer and the anticorrosive organic acid compound mentioned above to the water system. The preferred range of the usage ratio or the blending ratio is preferably 3 to 50:30 to 3, more preferably 3 to 20:20 to 3, further preferably 3 to 10:10 to 3. Examples of the combination of the polymer and the anticorrosive organic acid compound to which such a preferred usage ratio or blending ratio is applicable are not particularly limited. Preferred examples of the combination include: combinations of the (meth) acrylic acid-based polymer having a sulfone group (preferably the AA/AMPS-based polymer and/or the AA/HAPS-based polymer) and the anticorrosive organic acid compound (preferably iminodimalic acid); and combinations of the maleic acid-based polymer (preferably the MA-based monopolymer and/or the MA/IB-based polymer) and the anticorrosive organic acid compound (preferably iminodimalic acid).

In the case of combined use of the (meth)acrylic acid-based polymer, the dicarboxylic acid-based polymer, and the anticorrosive organic acid compound in a water system, the usage ratio in the water system or the blending ratio in a chemical agent thereamong is not particularly limited and may be determined by appropriately combining the respective usage amounts or addition amounts (mg/L) of the (meth)acrylic acid-based polymer, the dicarboxylic acid-based polymer, and the anticorrosive organic acid compound mentioned above to the water system. The preferred range of the usage ratio or the blending ratio is preferably 3 to 50:3 to 50:3 to 50, more preferably 3 to 20:3 to 20:3 to 20, further preferably 3 to 10:3 to 10:3 to 10. Examples of the combination thereof to which such a preferred usage ratio or blending ratio is applicable are not particularly limited. Preferred examples of the combination include: combinations of the (meth)acrylic acid-based polymer having a sulfone group (preferably the AA/AMPS-based polymer and/or the AA/HAPS-based polymer), the maleic acid-based polymer (preferably the MA-based monopolymer and/or the MA/IB-based polymer), and the anticorrosive organic acid compound (preferably iminodimalic acid).

<Optional component>

In the present embodiment, in addition to the polymer and the anticorrosive organic acid compound mentioned above, an optional component may be appropriately used in a water system or may be appropriately contained in a chemical agent, without impairing the advantageous effects of the present invention. The optional component is not particularly limited, and one or two or more selected from the group consisting of, for example, a pH adjuster, an antifoaming agent, a corrosion inhibitor, a scale preventive, a bactericide, and an algicide may be used.

In the present embodiment, in addition to combined use of the polymer and the anticorrosive organic acid compound mentioned above, a corrosion inhibitor other than these components or not in use may be further used in a water system. Examples of such a corrosion inhibitor include organic acid compounds, (meth)acrylic acid-based polymers and salts thereof, dicarboxylic acid-based polymers and salts thereof, polyaspartic acid and salts thereof, polyitaconic acid and salts thereof, amine compounds, and amino acid compounds. One or two or more selected from the group consisting thereof can be used. In the present embodiment, it is desired that a phosphorus compound and/or a metal salt compound (mg solid/L) should not be added as a chemical agent component to the water system, from the viewpoint of reducing environmental impacts. For example, it is desired that the compound should not be added in an amount of preferably 1 mg/L or more, more preferably should not be added in an amount of 0.5 mg/L or more, further preferably should not be substantially added, for example, should not be added in an amount of 0.1 or 0.05 mg/L or more, more preferably 0 mg/L or more (i.e., not added as a chemical agent component). It is highly desired that a phosphorus compound and/or a metal salt compound should not be contained or detected in the water system (a phosphorus-free system and/or a metal-free system), from the viewpoint of reducing environmental impacts. As for a method for determining a phosphorus concentration, the phosphorus concentration can be measured using a molybdenum blue (ascorbic acid reduction) method (JIS K 0102 46.1.1). The metal salt compound can be measured by IPC analysis.

In the present embodiment, in addition to combined use of the polymer and the anticorrosive organic acid compound mentioned above, a scale preventive other than these components or not in use may be further allowed to exist in a water system. Examples of the scale preventive include (meth)acrylic acid-based polymers and salts thereof, dicarboxylic acid-based polymers and salts thereof, and polyaspartic acid and salts thereof. One or two or more thereof can be used.

In the present embodiment, in addition to combined use of the polymer and the anticorrosive organic acid compound mentioned above, a slime control agent other than these components or not in use may be further allowed to exist in a water system. Examples of the slime control agent include, but are not particularly limited to, hypochlorous acid and salts thereof, chlorine gas, hypobromous acid and salts thereof, combined halogen compounds (stabilized chlorine, stabilized bromine, etc.), and organic bactericides. One or two or more selected from the group consisting thereof can be used.

1-5. Metal anticorrosion method for water system

The metal anticorrosion treatment method for a water system according to the present embodiment can employ the polymer and the anticorrosive organic acid compound in combination as mentioned above. It is preferred that these two components or three components should exist at the same time in the water system. In this respect, the polymer is preferably a (meth)acrylic acid-based polymer having a sulfone group, more preferably a combination of a (meth)acrylic acid-based polymer having a sulfone group and a dicarboxylic acid-based polymer.

In the present embodiment, these components may be added continuously or intermittently to the water system. In the present embodiment, these components can be added at the same time or at different times to the water system. The water system may have one or more chemical injection apparatuses for adding a chemical agent (component) to the water system. The chemical injection apparatus may add individual components, a mixture of two components and the other component, or a mixture of three components at the same time or at different times to the water system such that these two components or three components exist at the same time in the water system. In the present embodiment, examples of a site where these components are mixed include, but are not limited to, flow paths (e.g., circulating water channels) and pipes of the water system, and tanks (e.g., pits) such as chemical agent storage tanks or chemical agent mixing tanks that may be included in the water system. The water system may appropriately have, for example, a measurement apparatus capable of measuring each chemical agent concentration (each component concentration) in the water system, and a measurement apparatus capable of measuring the water quality of the water system. In the present embodiment, the obtained measurement results may be transmitted to a control unit or the like, and the control unit or the like may control or manage the method of the present embodiment or a step, operation, or the like thereof.

For the metal anticorrosion method for a water system according to the present embodiment, it is preferred that, as mentioned above, the polymer (preferably the (meth)acrylic acid-based polymer having a sulfone group) and the anticorrosive organic acid compound, or the (meth)acrylic acid-based polymer having a sulfone group, the dicarboxylic acid-based polymer, and the anticorrosive organic acid compound should be allowed to exist at a predetermined mass usage ratio or mass content ratio in the water system.

In the present embodiment, the polymer (preferably the (meth)acrylic acid-based polymer having a sulfone group) and the anticorrosive organic acid compound, or the (meth)acrylic acid-based polymer having a sulfone group, the dicarboxylic acid-based polymer, and the anticorrosive organic acid compound can be added as a one-part chemical agent or as a multi-part chemical agent to the water system.

An alternative aspect of the present embodiment can also provide an anticorrosion method for a water system, comprising adding a water treatment agent containing at least any one of the polymer (preferably the (meth)acrylic acid-based polymer having a sulfone group) and the anticorrosive organic acid compound to a water system so that the polymer (preferably the (meth)acrylic acid-based polymer having a sulfone group) and the anticorrosive organic acid compound are allowed to exist in the water system.

An alternative aspect of the present embodiment can also provide, in a more preferred embodiment, an anticorrosion technique for a water system, comprising adding a water treatment agent containing at least any one of the (meth)acrylic acid-based polymer having a sulfone group, the dicarboxylic acid-based polymer, and the anticorrosive organic acid compound to a water system so that three components, i.e., the (meth)acrylic acid-based polymer having a sulfone group, the dicarboxylic acid-based polymer, and the anticorrosive organic acid compound are allowed to exist in the water system.

For combined use of the polymer (preferably the (meth)acrylic acid-based polymer having a sulfone group) and the anticorrosive organic acid compound or combined use of the (meth)acrylic acid-based polymer having a sulfone group, the dicarboxylic acid-based polymer, and the anticorrosive organic acid compound, these two components or three components may be added at the same time or at different times to the water system such that these two components or three components can exist in the water system. The addition of these two components or three components may be continuous or intermittent.

In a more preferred embodiment, the present embodiment can also provide a metal anticorrosion treatment method for a water system, which uses (i) a metal anticorrosion treatment agent, (ii) a water treatment agent, or (iii) a water treatment agent for metal anticorrosion or a combination product for water treatment agents as described below. In the present specification, the combination product may be a set product or a kit product.

(i) A metal corrosion inhibitor, comprising the polymer (preferably the (meth)acrylic acid-based polymer having a sulfone group) and the anticorrosive organic acid compound. The metal corrosion inhibitor preferably further comprises the dicarboxylic acid-based polymer.

(ii) A water treatment agent, comprising at least the polymer (preferably the (meth)acrylic acid-based polymer having a sulfone group) and/or the anticorrosive organic acid compound, wherein

at least the polymer (preferably the (meth)acrylic acid-based polymer having a sulfone group) and the anticorrosive organic acid compound are used by combined use for reinforcing, enhancing, or improving metal anticorrosion ascribable to the polymer when the water treatment agent is used for a water system.

(iii) A water treatment agent for metal anticorrosion, comprising at least any of the (meth)acrylic acid-based polymer having a sulfone group, the dicarboxylic acid-based polymer, and the anticorrosive organic acid compound, wherein the (meth)acrylic acid-based polymer having a sulfone group, the dicarboxylic acid-based polymer, and the anticorrosive organic acid compound are used in combination for a water system when the water treatment agent is used in the metal anticorrosion of the water system.

The water treatment agent may be a combination product for a water treatment agent constituted by at least one, two, or three selected from the group consisting of a first water treatment agent comprising the (meth)acrylic acid-based polymer having a sulfone group, a second water treatment agent comprising the dicarboxylic acid-based polymer, and a third water treatment agent comprising the anticorrosive organic acid compound. In the present specification, the combination product may be a set product or a kit product.

Examples of the water system to which the present embodiment is applied include, but are not particularly limited to, cooling water systems, hot water systems, membrane water systems (e.g., reverse osmosis membrane (RO) water systems), pulp and paper process water systems, and scrubber water systems. In the present embodiment, a corrosion-preventing effect can be sufficiently exerted for the water quality of a general water system (preferably a cooling water system).

The present embodiment has the excellent feature that the present embodiment is applicable to water quality in a wide range of hardnesses from high to low hardnesses. In the present embodiment, a corrosion-preventing effect is sufficiently exerted for the water quality of a general cooling water system.

In the present embodiment, a corrosion-preventing effect is sufficiently exerted without using a phosphorus compound as a metal corrosion inhibitor. Therefore, the present embodiment is applicable to wastewater standards of phosphorus concentrations prescribed by each country, and can appropriately adopt, for example, the phosphorus concentration described in the addition amount of the phosphorus compound. For example, the phosphorus concentration as a condition of the water quality of the water system may be preferably 0.5 mg/L as P or less, more preferably 0.1 mg/L as P or less.

The calcium hardness (mg/L as $CaCO_3$; hereinafter, also referred to as "mg/L") as a condition of the water quality of the water system is not particularly limited. In the present embodiment, a corrosion-preventing effect can be obtained not only for a high hardness but for a low hardness. The preferred upper limit value is not particularly limited and is, for example, 1000 mg/L or less, preferably 800 mg/L or less, more preferably 700 mg/L or less, more preferably 600 mg/L or less. The preferred lower limit value is preferably 25 mg/L or more, more preferably 50 mg/L or more, further preferably 80 mg/L or more, more preferably 100 mg/L or more, more preferably 130 or 150 mg/L or more. The preferred numeric range is preferably 50 to 1000 mg/L. The calcium hardness can be determined in accordance with JIS K 0101 Testing methods for industrial water.

The M alkalinity (acid consumption (pH 4.8): (mg/L as $CaCO_3$; hereinafter, also referred to as "mg/L") as a condition of the water quality of the water system is not particularly limited and is preferably 10 to 1000 mg/L, more preferably 25 to 500 mg/L, further preferably 50 to 300 mg/L. The acid consumption (PH4.8) can be determined in accordance with JIS K 0101 Testing methods for industrial water.

The magnesium hardness as a condition of the water quality of the water system is not particularly limited. The preferred upper limit value is preferably 500 mg/L or less, more preferably 400 mg/L or less, further preferably 350 mg/L or less, more preferably 300 mg/L or less. The magnesium hardness can be determined in accordance with JIS K 0101 Testing methods for industrial water.

The chloride ion concentration as a condition of the water quality of the water system is not particularly limited and is preferably 800 mg/L or less, more preferably 600 mg/L or less, further preferably 500 mg/L or less, more preferably 300 mg/L or less, more preferably 100 mg/L or less. The chloride ion concentration can be determined in accordance with JIS K 0101 Testing methods for industrial water.

The sulfate ion concentration as a condition of the water quality of the water system is not particularly limited and is preferably 800 mg/L or less, more preferably 600 mg/L or less, further preferably 500 mg/L or less, more preferably 300 mg/L or less, more preferably 100 mg/L or less. The sulfate ion concentration can be determined in accordance with JIS K 0101 Testing methods for industrial water.

The silica concentration as a condition of the water quality of the water system is not particularly limited and is preferably 5 to 250 mg/L, more preferably 10 to 150 mg/L, further preferably 15 to 100 mg/L. The silica concentration can be determined in accordance with JIS K 0101 Testing methods for industrial water.

The pH preferred as a condition of the water quality of the water system is preferably 6 to 11, more preferably 6.5 to 10, further preferably 7 to 9. The water temperature of the water system is not particularly limited and is preferably 0 to 100°C, more preferably 5 to 80°C, further preferably 10 to 60°C, further preferably 10 to 40°C. The lower limit value of the water temperature of the water system is preferably 0°C or higher, more preferably 5°C or higher. The present embodiment has the excellent advantage that even if there exists a site where the water system locally becomes a high-temperature state, such as a heat exchanger or a heat exchange apparatus and a pipe carried thereby, a scale suppression or prevention can be attained even at such a location or a site in a high-temperature state, as shown in [Examples] described later. In this respect, the high-temperature state to which the present embodiment is capable of responding favorably is not particularly limited, and the preferred upper limit value is, for example, 150°C or lower, preferably 130°C or lower, further preferably 120°C or lower, more preferably 100°C or lower, further preferably 80°C or lower, further preferably 60°C or lower, further preferably 40°C or lower.

In a preferred embodiment, the present embodiment is preferably applied to a water system using a metallic material susceptible to corrosion by water at various locations (e.g., a heat exchanger and a pipe).

In a preferred embodiment, the present embodiment is desirably applied to a water system including a heat transfer surface because the present embodiment can be expected to achieve scale prevention for the heat transfer surface (a heat exchanger, a flow path or a pipe for heat exchange, and a heat exchange mechanism comprising these) and contribute to maintaining the concentration of a corrosion inhibitor in the water system including the heat transfer surface. In a more preferred embodiment, the present embodiment can be more preferably applied to a cooling water system, further preferably a circulation cooling water system. According to the present embodiment, the anticorrosion treatment method of the present embodiment is capable of sufficiently exerting a corrosion-preventing effect.

The method of the present embodiment may be achieved using a control unit including CPU or the like in a device (e.g., a computer, PLC, a server, or a cloud service) for managing the metal anticorrosion treatment mentioned above, a cooling water system mentioned later, or the like. The method of the present embodiment may also be achieved by storing the method as a program in a hardware resource having a recording medium (non-volatile memory (USB memory, etc.), SSD, HDD, CD, DVD, Blu-ray, etc.) or the like, and using the control unit. The recording medium is preferably a recording medium readable by a computer. The present embodiment may also provide, for example, a metal anticorrosion treatment system that controls the addition of a chemical agent to a water system by a control unit, or an apparatus having the control unit or the system. The management apparatus has at least CPU as a constituent element of a computer. Examples thereof include input units such as keyboards, communication units such as network, display units such as displays, storage units such as HDD, ROM, and RAM. One or two or more constituent elements can be selected from the group consisting thereof. Among them, it is preferred to have RAM, a storage unit, a display unit, and an input unit. The respective constituent elements thus selected are connected through, for example, a bus as a data transmission path.

<Cooling water system>

The cooling water system to which the present embodiment is applied is not particularly limited and is preferably a system in which cooling water for use in the operation of a heat exchanger or the like passes in an air conditioning facility for buildings, local facilities, or the like, and a plant, etc. The cooling water system may have a transient mode, an open circulation mode, or a closed circulation mode.

The present embodiment is applied to a circulation cooling water system, whereby an excellent corrosion-preventing effect can be exerted in the circulation cooling water system.

The circulation cooling water system is not particularly limited and is preferably, for example, a water system that has a cooling tower in the system and is placed in, for example, air conditioning, a petrochemical complex, or a general factory. The circulation cooling water system is preferably configured so as to indirectly cool a heat source that occurs in such air conditioning, a general factory, or the like, and may be a general water system configured so as to comprise a heat exchanger, a circulating water channel, and a cooling tower.

The type of the circulation cooling water system is not particularly limited and may be an open circulation cooling water system or a closed circulation cooling water system. The open circulation cooling water system is preferably configured so as to enable cooling water to circulate in an open mode. The closed circulation cooling water system is preferably configured to enable cooling water to circulate in a closed mode.

The cooling metal anticorrosion treatment method for a water system (more specifically, the metal anticorrosion treatment method for a metal member in a cooling water system) according to the present embodiment preferably comprises at least the step of adding each of the polymer and the anticorrosive organic acid compound into the cooling water system to bring the components into contact with the metal member. In this respect, (i) the polymer and the anticorrosive organic acid compound or (ii) the (meth)acrylic acid-based polymer having a sulfone group, the dicarboxylic acid-based polymer, and the anticorrosive organic acid compound may be added as a metal anticorrosion treatment agent which is a one-part chemical agent, or may be added as a combination product for a metal anticorrosion treatment agent which is a multi-part chemical agent. One or more of the polymers and the anticorrosive organic acid compound may be added at the same time or at different times to the cooling water system and are preferably added such that these two components or three components or more exist together in the water system. The period for which these two components or three components or more exist together in the water system is not particularly limited and may be continuous or intermittent.

The addition site of a chemical agent is not particularly limited and may be any site in the cooling water system. Examples thereof include water spraying units, pits, makeup water supplying units, chemical agent injection units, circulating water channels, transfer pumps, and heat exchangers and preferably include makeup water supplying units, chemical agent injection units, circulating water channels, and transfer pumps. The addition can be performed at one or two or more sites selected from the group consisting thereof. These two components or three components or more are added such that the components can exist at any site in the water system, whereby a more favorable corrosion-preventing effect on a metallic material in contact with water can be obtained downstream thereof. When the whole or a portion of the water system circulates, these two components or three components or more can be mixed by the circulation of the water system to obtain a more favorable corrosion-preventing effect on a metallic material in contact with water in the water system.

As mentioned above, the metal anticorrosion treatment method of the present embodiment can impart an excellent corrosion-preventing effect to a metal member in contact with water.

A metal anticorrosion treatment method for an open circulation cooling water system 1 will be described as one example of the present embodiment with reference to Fig. 1, though the present embodiment is not limited thereto. Hereinafter, metal anticorrosion treatment using the polymer and the anticorrosive organic acid compound mentioned above will be described. Examples of preferred embodiments of these components include, as mentioned above, the (meth)acrylic acid-based polymer having a sulfone group, the dicarboxylic acid-based polymer, and the anticorrosive organic acid compound.

In the open circulation cooling water system 1, water containing one or more of the polymers and the anticorrosive organic acid compound is transferred from a pit 15 to a heat exchanger 30 through a circulating water channel 20 by a transfer pump 21 and, after the heat exchanger 30, brought back to an open cooling tower 10 through the circulating water channel 20. In the cooling tower 10, the water containing the polymer(s) and the anticorrosive organic acid compound is stored in the pit 15 through a water spraying unit 12 and a packing material region 13 and transferred again to the circulating water channel 20 by the pump 21. The present embodiment can continue to maintain a corrosion-preventing effect for the cooling water system during this circulation. This circulation can bring one or more of the polymers and the anticorrosive organic acid compound present in the water in the water system into contact with a metal member, and a corrosion-preventing effect can be exerted on the metal member. The components are preferably added to the water system using a chemical injection apparatus that can add each of one or more of the polymers and the anticorrosive organic acid compound or a mixture of these two components or three components or more so that these two components or three components or more are allowed to exist together in the water system. The addition amount of each component may be adjusted such that the concentrations of these components fall within their respective predetermined concentration ranges in the water system.

One or more of the polymers and the anticorrosive organic acid compound are transferred at the same time or at different times to the pit 15 by one or more chemical agent injection units 17 and may be mixed in piping during this transfer or may be mixed in the pit 15. One or more chemical agent injection units 17 may be disposed. For example, in order to use one or more of the polymers and the anticorrosive organic acid compound, a plurality of separate chemical agent injection units may be disposed. Alternatively, one chemical agent injection unit may be disposed so as to add a one-part chemical agent comprising these to the water system or mix these components. Water making up a deficiency ascribable to transpiration or the like is supplied, if necessary, to the pit 15 by a makeup water supplying unit 16. A flow path through which this makeup water is supplied to the pit 15 may be configured so as to enable one or more chemical agents to be added from the chemical agent injection unit 17. Air for cooling is discharged from a blast unit 11 through a looper 18, 13, and 12 by outside air discharge using the blast unit 11.

Description about each technical feature, each configuration, each definition, each term, each treatment method, and various units for the polymer (e.g., the (meth)acrylic acid-based polymer having a sulfone group and the dicarboxylic acid-based polymer), the anticorrosive organic acid compound, usage concentrations and usage ratios thereof, and the metal anticorrosion treatment of a water system, the metal anticorrosion treatment management of a water system, the metal anticorrosion system for a water system, the metal anticorrosion treatment method for a water system, and the like, which is the same as or overlap with the contents mentioned later (e.g., "2." to "3."), is appropriately omitted in the above description about the examples of the metal anticorrosion treatment method for a water system, and the like according to the present embodiment,. However, the description of "1." to "3.", etc. can apply to each embodiment and can be appropriately adopted to each embodiment.

2. Metal corrosion inhibitor, etc. according to present embodiment

Description about each technical feature, each configuration, each definition, each term, each treatment method, and various units for the polymer (e.g., the (meth)acrylic acid-based polymer having a sulfone group and the dicarboxylic acid-based polymer), the anticorrosive organic acid compound, usage concentrations and usage ratios thereof, and the metal anticorrosion treatment of a water system, the metal anticorrosion treatment management of a water system, the metal anticorrosion system for a water system, the metal anticorrosion treatment method for a water system, and the like, which is the same as or overlap with the above content (e.g., "1.") and the contents mentioned later (e.g., "3."), is appropriately omitted in the description about the examples of the metal corrosion inhibitor, the water treatment agent, the combination product for water treatment agents, and the like according to the present embodiment,. However, the description of "1." to "3.", etc. can apply to each embodiment and can be appropriately adopted to each embodiment.

In the present embodiment, the polymer (preferably the (meth)acrylic acid-based polymer having a sulfone group and/or the dicarboxylic acid-based polymer) and the anticorrosive organic acid compound are used for a water system, whereby an excellent corrosion-preventing action can be exerted on a metal that comes into contact with water in the water system. Specifically, a combination of the polymer and the anticorrosive organic acid compound can be contained as an active ingredient in a composition for the anticorrosion of a water system, a metal corrosion inhibitor for a water system, a water treatment agent, a chemical agent, and the like or can be used in these compositions and the like. In the present embodiment, the composition may be an agent while the agent may be a composition.

In the present embodiment, the polymer (preferably the (meth)acrylic acid-based polymer having a sulfone group and/or the dicarboxylic acid-based polymer) and the anticorrosive organic acid compound mentioned above or a mixture thereof can be used for producing a composition, a metal corrosion inhibitor for the water system mentioned above, a combination product for a water treatment agent, and the like.

The present embodiment can also provide the polymer (preferably the (meth)acrylic acid-based polymer having a sulfone group and/or the dicarboxylic acid-based polymer) and the anticorrosive organic acid compound mentioned above or a mixture thereof, or use thereof for the metal anticorrosion of the water system mentioned above or for use therein.

The present embodiment is capable of also providing a metal anticorrosion method for a water system or a metal anticorrosion treatment method for a water system, which uses the polymer (preferably the (meth)acrylic acid-based polymer having a sulfone group and/or the dicarboxylic acid-based polymer) and the anticorrosive organic acid compound or the mixture, or the metal corrosion inhibitor for the water system, the water treatment agent, the combination product for water treatment agents, or the like.

The present embodiment can also provide a metal corrosion inhibitor comprising the polymer (preferably the (meth)acrylic acid-based polymer having a sulfone group and/or the dicarboxylic acid-based polymer) and the anticorrosive organic acid compound.

The present embodiment can also provide a water treatment agent for metal anticorrosion, comprising at least any of the polymer (preferably the (meth)acrylic acid-based polymer having a sulfone group and/or the dicarboxylic acid-based polymer) and the anticorrosive organic acid compound, wherein the polymer (preferably the (meth)acrylic acid-based polymer having a sulfone group and/or the dicarboxylic acid-based polymer) and the anticorrosive organic acid compound are used in combination for a water system when the water treatment agent is used in the metal anticorrosion of the water system. The water treatment agent may be a combination product for a water treatment agent constituted by at least one, two, or three selected from the group consisting of a first water treatment agent comprising the (meth)acrylic acid-based polymer having a sulfone group, a second water treatment agent comprising the dicarboxylic acid-based polymer, and a third water treatment agent comprising the anticorrosive organic acid compound.

Another aspect of the present embodiment can also provide a water treatment agent, comprising the polymer (preferably the (meth)acrylic acid-based polymer having a sulfone group and/or the dicarboxylic acid-based polymer) and/or the anticorrosive organic acid compound, wherein the polymer (preferably the (meth)acrylic acid-based polymer having a sulfone group and/or the dicarboxylic acid-based polymer) and the anticorrosive organic acid compound are used by combined use for reinforcing, enhancing, or improving metal anticorrosion ascribable to the polymer when the water treatment agent is used for a water system.

An alternative aspect of the present embodiment can also provide the polymer (preferably the (meth)acrylic acid-based polymer having a sulfone group and/or the dicarboxylic acid-based polymer) and the anticorrosive organic acid compound, or use of each individual of these components or a plurality thereof, in the production of the agent or the like or for producing the agent or the like or for use in the production of the agent or the like.

An alternative aspect of the present embodiment can also provide an anticorrosion method for a water system for suppressing the corrosion of a metal which is in contact with water, the method which uses the agent or the like.

The polymer is preferably a water-soluble organic polymer, more preferably the (meth)acrylic acid-based polymer having a sulfone group and/or the dicarboxylic acid-based polymer. The (meth)acrylic acid-based polymer having a sulfone group is more preferably a copolymer of a (meth)acrylic acid monomer and a monomer containing a sulfone group, further preferably a copolymer of a (meth)acrylic acid monomer and a monomer containing an amide group or a hydroxy group and a sulfone group. The dicarboxylic acid-based polymer is more preferably a maleic acid-based polymer, further preferably polymaleic acid or a maleic acid-based copolymer.

The (meth)acrylic acid-based polymer is preferably a (meth)acrylic acid-based polymer containing a sulfone group, and the molar ratio between a (meth)acrylic acid monomer and a sulfonic acid monomer in the polymer is preferably 75:25 to 93:7. The (meth)acrylic acid-based polymer is preferably an AA/AMPS-based polymer and/or an AA/HAPS-based polymer.

The dicarboxylic acid-based polymer is preferably a maleic acid-based polymer, and the molar ratio between a maleic acid monomer and a monomer having an unsaturated bond other therethan is preferably 50 or more:less than 50. Among the maleic acid-based polymer is polymaleic acid and/or a MA/butene (preferably IB) polymer.

The anticorrosive organic acid compound is preferably one or two or more selected from the group consisting of citric acid, tartaric acid, mucic acid, glucoheptonic acid, butanetetracarboxylic acid, iminodimalic acid, and 3-hydroxy-2,2'-iminodisuccinic acid, among which iminodimalic acid is preferred.

The usage ratio to the water system or the blending ratio in a chemical agent between the polymer (preferably the (meth)acrylic acid-based polymer having a sulfone group and/or the dicarboxylic acid-based polymer) and the anticorrosive organic acid compound is preferably 3 to 50:3 to 50. The usage ratio to the water system or the blending ratio in a chemical agent between the (meth)acrylic acid-based polymer having a sulfone group and the dicarboxylic acid-based polymer is preferably 3 to 50:3 to 50. The (meth)acrylic acid-based polymer:dicarboxylic acid-based polymer:anticorrosive organic acid compound usage ratio to the water system or blending ratio in a chemical agent is preferably 3 to 50:3 to 50:3 to 50.

3. The present technique can also adopt the following technical features, configurations, or other aspects.

[1] A metal anticorrosion treatment method for a water system, which uses

a copolymer of a (meth)acrylic acid monomer and a sulfonic acid-containing monomer, and
an anticorrosive organic acid compound having an organic acid corrosion-preventing effect index of 4 or more.

[2] The method for a water system according to [1], which further uses a dicarboxylic acid-based polymer.

[3] A metal anticorrosion treatment method for a water system, which uses a copolymer of a (meth)acrylic acid monomer and a sulfonic acid-containing monomer, a dicarboxylic acid-based polymer, and an anticorrosive organic acid compound having an organic acid corrosion-preventing effect index of 4 or more.

[4] The method according to any one of [1] to [3], wherein the method is an anticorrosion method for a water system for suppressing the corrosion of a metal which is in contact with the water system.

[5] A metal anticorrosion treatment agent for a water system, comprising a copolymer of a (meth)acrylic acid monomer and a sulfonic acid-containing monomer, and an anticorrosive organic acid compound having an organic acid corrosion-preventing effect index of 4 or more.

[6] A metal anticorrosion treatment agent for a water system, comprising (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more.

[7] A water treatment agent, comprising at least any of (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more, wherein (i) a combination of the component (A) and the component (C), (ii) a combination of the component (B) and the component (C), or a combination of the components (A) to (C) is used when the water treatment agent is used in the metal anticorrosion treatment of a water system.

[8] A water treatment agent, comprising an anticorrosive organic acid compound having an organic acid corrosion-preventing effect index of 4 or more, wherein
the water treatment agent is used for enhancing, by the anticorrosive organic acid compound, the metal anticorrosion treatment of a water system (i) with a copolymer of a (meth)acrylic acid monomer and a sulfonic acid-containing monomer, (ii) with a dicarboxylic acid-based polymer, or (iii) with a copolymer of a (meth)acrylic acid monomer and a sulfonic acid-containing monomer and a dicarboxylic acid-based polymer.

[9] A method for enhancing the metal anticorrosion treatment of a water system with (A) a copolymer of a (meth)acrylic acid monomer and a sulfonic acid-containing monomer, with (B) a dicarboxylic acid-based polymer, or with (A) a copolymer of a (meth)acrylic acid monomer and a sulfonic acid-containing monomer and (B) a dicarboxylic acid-based polymer,
wherein the method uses an anticorrosive organic acid compound having an organic acid corrosion-preventing effect index of 4 or more.

[10] One component, a combination of two components, or a combination of three components selected from the group consisting of (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more, or use of each individual of these components or a plurality thereof, in the production of an agent according to any one of [5] to [8] or for producing the agent or for use in the production of the agent.

[11] One component, a combination of two components, or a combination of three components selected from the group consisting of (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more, or use of each individual of these components or a plurality thereof, for the metal anticorrosion treatment of a water system or for use in the metal anticorrosion treatment of a water system.

[12] A metal anticorrosion treatment method for a water system, which uses or adding one component, a combination of two components, or a combination of three components selected from the group consisting of (A) a copolymer of a (meth)acrylic acid monomer and a sulfonic acid-containing monomer, (B) a dicarboxylic acid-based polymer, and (C) an anticorrosive organic acid compound having an organic acid corrosion-preventing effect index of 4 or more in or to the water system.

[13] A method for reinforcing, enhancing, or improving the metal anticorrosion treatment of a water system (i) with a copolymer of a (meth)acrylic acid monomer and a sulfonic acid-containing monomer, (ii) with a dicarboxylic acid-based polymer, or (iii) with a copolymer of a (meth)acrylic acid monomer and a sulfonic acid-containing monomer and a dicarboxylic acid-based polymer, the method which uses an anticorrosive organic acid compound having an organic acid corrosion-preventing effect index of 4 or more.

[14] An anticorrosive organic acid compound having an organic acid corrosion-preventing effect index of 4 or more for use or use thereof in reinforcing, enhancing, or improving the metal anticorrosion treatment of a water system (i) with a copolymer of a (meth)acrylic acid monomer and a sulfonic acid-containing monomer, (ii) with a dicarboxylic acid-based polymer, or (iii) with a copolymer of a (meth)acrylic acid monomer and a sulfonic acid-containing monomer and a dicarboxylic acid-based polymer.

[15] The copolymer of a (meth)acrylic acid monomer (preferably an acrylic acid monomer) and a sulfonic acid-containing monomer according to any one of [1] to [14] is preferably a (meth)acrylic acid monomer and a monoethylenic unsaturated sulfonic acid monomer, or the sulfonic acid monomer is preferably a monomer having an amide group and a sulfone group and/or a monomer having a hydroxy group and a sulfone group. The copolymer of a (meth) acrylic acid monomer and a sulfonic acid-containing monomer is further preferably one or two or more selected from the group consisting of an AA/AMPS polymer and an AA/HAPS polymer.

[16] The dicarboxylic acid-based polymer according to any one of [1] to [15] is preferably one or two or more selected from the group consisting of a maleic acid-based polymer and polyepoxysuccinic acid. The maleic acid-based polymer is further preferably one or two or more selected from the group consisting of a homopolymer of a maleic acid monomer (polymaleic acid) and a copolymer of a maleic acid monomer and an unsaturated hydrocarbon monomer (preferably an isobutylene monomer). The dicarboxylic acid-based polymer is still further preferably one or two or more selected from the group consisting of a MA-based polymer (polymaleic acid) and a MA/butene (preferably IB) polymer.

[17] The anticorrosive organic acid compound according to any one of [1] to [16] is preferably an organic acid compound having a carboxylic acid group. The anticorrosive organic acid compound is more preferably an organic acid compound having a carboxylic acid group and a hydroxy group. The anticorrosive organic acid compound is one or two or more selected from the group consisting of citric acid, tartaric acid, mucic acid, glucoheptonic acid, butanetetracarboxylic acid, iminodimalic acid, and 3-hydroxy-2,2'-iminodisuccinic acid, among which iminodimalic acid is further preferred.

[18] In [1] to [17], the addition amount of the copolymer of a (meth)acrylic acid monomer and a sulfonic acid-containing monomer to the water system is preferably 5 mg/L or more, and/or the addition amount of the dicarboxylic acid-based polymer to the water system is preferably 5 mg/L or more, and/or the addition amount of the anticorrosive organic acid compound to the water system is preferably 5 mg/L or more.

[19] In [1] to [18], the usage ratio or the blending ratio between the copolymer of a (meth)acrylic acid monomer and a sulfonic acid-containing monomer and the anticorrosive organic acid compound is preferably 5 to 50:5 to 50.

[20] In [1] to [19], the usage ratio or the blending ratio among the copolymer of a (meth)acrylic acid monomer and a sulfonic acid-containing monomer, the dicarboxylic acid-based polymer, and the anticorrosive organic acid compound is preferably 5 to 50:5 to 50:5 to 50.

Examples

Hereinafter, the embodiments and the like of the present invention will be described with reference to Examples and Comparative Examples, etc. Examples described below illustrate one example of typical Examples of the present invention, and the scope of the present invention should not thereby be construed as limited.

<Material>

The polymers shown in Tables 1 and 2 were used in tests.

| Table 1 (Meth)acrylic acid-based polymer | | | | | |
|---|---|---|---|---|---|
| Designation | Structure | Ratio | Weight average molecular weight | Product name | Manufacturer |
| AA-based polymer 1 (AA/AMPS copolymer 1) | AA/AMPS | 90:10 | 4500 | Acumer2000 | Dow |
| AA-based polymer 2 (AA/AMPS copolymer 2) | AA/AMPS | 81:19 | 11000 | Acumer2100 | Dow |
| AA-based polymer 3 (AA/HAPS copolymer 3) | AA/HAPS | 82:18 | 11000 | Aqualic GS-175 | Nippon Shokubai |
| AA-based polymer 4 (AA monopolymer) | AA | 100:0 | 2000 | Acumer1000 | Dow |
| AA-based polymer 5 (AA/EA copolymer ) | AA/EA | 95:5 | 2000 | Acumer2200 | Dow |
| AA: acrylic acid, AMPS: acrylamidomethylpropanesulfonic acid, HAPS: 3-allyloxy-2-hydroxypropanesulfonic acid, EA: ethyl acrylate<br>Weight average molecular weight: GPC analysis (standard material: polyacrylic acid) | | | | | |

| Table 2 Dicarboxylic acid-based polymer | | | | | |
|---|---|---|---|---|---|
| Designation | Structure | Ratio | Weight average molecular weight | Product name | Manufacturer |
| DCA-based polymer 1 (MA-based polymer 1) (MA/IB copolymer 1) | MA/IB | MA 50 or more | 1000 | CrestoGuard559 | Crest Water |
| DCA-based polymer 2 (MA-based polymer 2) (MA monopolymer 2) | MA | 100 | 1000 | Belclene200 | Italmach |
| DCA-based polymer 3 (ESA polymer) | ESA | 100 | 600 | Polyepoxysuccinic acid | Shandong Taihe Technologies |
| MA: maleic acid, IB: isobutylene, ESA: epoxysuccinic acid<br>Weight average molecular weight: GPC analysis (standard material: polyacrylic acid) | | | | | |

<Test Example 1>

<Approach>

A corrosion test was conducted in order to search for an organic acid exhibiting a favorable corrosion-preventing effect. Operational conditions involved a water temperature of 30°C, a testing period of 3 days, and a rotational speed of 150 rpm. Specifically, with reference to "K 0100: Testing methods for industrial corrosivity", test water adjusted to satisfy the water quality conditions given below was placed in a beaker with a stirring bar arranged on the bottom. Further, a hanging test piece in a vertically long strip form was completely dipped in this test water and arranged near the center of the beaker so as not to come into contact with the stirring bar. The corrosion test was carried out.

The water quality conditions involved a calcium hardness of 500 mg/L as $CaCO_3$, an acid consumption (pH 4.8) of 200 mg/L as $CaCO_3$, a magnesium hardness of 250 mg/L, a chloride ion concentration of 350 mg/L, a sulfate ion concentration of 500 mg/L, 10 mg/L acrylic acid-based polymer 1 (AA-based polymer containing S), 5 mg/L dicarboxylic acid-based polymer 1 (MA-based polymer 1), 50 mg/L organic acid, and pH adjusted to 8.6. The organic acid used was each organic acid shown in Table 3 below.

The material used in the test was a test piece made of SPCC (30 mm wide × 50 mm long × 1 mm thick). One test piece was dipped per 1L of the test water. The test results were assessed by determining the amount of decrease in corrosion from the difference in weight between before and after the test of the test piece, and calculating a corrosion rate (mm/y) according to the expression given below (specific weight: 7.87 g/cm$^3$). The material of SPCC (steel plate cold commercial: a cold-rolled steel plate) is low-carbon steel having a carbon content of 0.15% or less.

Expression 1

$$\text{Corrosion rate (mm/y)} = \frac{\text{Amount of decrease in corrosion (mg)}}{\text{Specific weight (g/cm}^3) \times \text{Surface area (mm}^2) \times \text{Period (year)}}$$

<Organic acid corrosion-preventing effect index> was determined as an index that indicated a corrosion-preventing effect of the organic acid according to the following expression. The molecular weight (M.W.) of the organic acid was calculated from the total atomic weight of the molecule.

Organic acid corrosion-preventing effect index = (Total atomic weight of oxygen atoms in the molecule / Molecular weight) × (The number of COOH groups in the molecule) × (The total number of COOH groups and OH groups in the molecule)

<Results>

When the organic acid corrosion-preventing effect index was less than 4, the corrosion rate was large; and when the organic acid corrosion-preventing effect index was 4 or more, the corrosion rate was small, demonstrating that the threshold of the organic acid corrosion-preventing effect index was 4 and a molecule having a larger organic acid corrosion-preventing effect index serves as a favorable corrosion inhibitor. The group of these organic acids having an organic acid corrosion-preventing effect index of 4 or more was regarded as an anticorrosive organic acid compound. Among the organic acids used in Test Example 1, glucoheptonic acid, tartaric acid, citric acid, mucic acid, 1,2,3,4-butanetetracarboxylic acid, and iminodimalic acid were confirmed to have an organic acid corrosion-preventing effect index of 4 or more. Thus, these organic acids were confirmed to have a corrosion-preventing effect as excellent as a corrosion rate of 0.05 or less. These organic acid compounds having an organic acid corrosion-preventing effect index of 4 or more were very favorable with a corrosion rate of 0.01 to 0.02. It was found preferred to adopt one or two or more selected from the group consisting thereof as an anticorrosive organic acid compound.

These anticorrosive organic acid compounds had an organic acid corrosion-preventing effect index of 14 at maximum. However, the upper limit value of the organic acid corrosion-preventing effect index is not particularly limited and can be reduced to a corrosion rate of 0.02 or less. The present inventors believed that an organic acid having a hydroxy group (OH group) and a carboxylic acid group (COOH group) could exert a favorable corrosion-preventing effect. It was found that the anticorrosive organic acid compound having hydroxy group (OH group) and a carboxylic acid group (COOH group) is preferred.

| Table 3 Corrosion-preventing effect of organic acid | | | | | |
|---|---|---|---|---|---|
| Organic acid | The number of functional groups | | Molecular weight (M.W.) | Organic acid corrosion-preventing effect index | Corrosion rate (mm/y) |
| | OH group | COOH group | | | |
| Xylitol | 5 | 0 | 152.15 | 0.0 | 0.38 |
| Oleic acid | 0 | 1 | 282.47 | 0.1 | 0.43 |
| Ricinoleic acid | 1 | 1 | 298.5 | 0.3 | 0.25 |

(continued)

| Table 3 Corrosion-preventing effect of organic acid | | | | | |
|---|---|---|---|---|---|
| Organic acid | The number of functional groups | | Molecular weight (M.W.) | Organic acid corrosion-preventing effect index | Corrosion rate (mm/y) |
| | OH group | COOH group | | | |
| Glycolic acid | 1 | 1 | 76.05 | 1.3 | 0.43 |
| Succinic acid | 0 | 2 | 118.1 | 2.2 | 0.45 |
| Oxalic acid | 0 | 2 | 90.03 | 2.8 | 0.4 |
| Gluconic acid | 5 | 1 | 196.16 | 3.4 | 0.10 |
| Malic acid | 1 | 2 | 134.1 | 3.6 | 0.27 |
| Glucoheptonic acid | 6 | 1 | 226.19 | 4.0 | 0.02 |
| Tartaric acid | 2 | 2 | 150.1 | 5.1 | 0.01 |
| Citric acid | 1 | 3 | 192.1 | 7.0 | 0.02 |
| Mucic acid | 4 | 2 | 210.14 | 7.3 | 0.02 |
| 1,2,3,4-Butanetetracarboxylic acid | 0 | 4 | 234.16 | 8.7 | 0.01 |
| Iminodimalic acid | 2 | 4 | 281.18 | 13.7 | 0.02 |

<Test Example 2>

<Approach>

A combination with a (meth)acrylic acid-based polymer and a dicarboxylic acid-based polymer was studied using iminodimalic acid among the organic acids that exhibited a favorable corrosion-preventing effect in Test Example 1. Operational conditions involved a water temperature of 40°C, a testing period of 3 days, and a rotational speed of 150 rpm. The water quality conditions of test water involved a calcium hardness of 150 mg/L as $CaCO_3$, an acid consumption (pH 4.8) of 65 mg/L as $CaCO_3$, a magnesium hardness of 50 mg/L as $CaCO_3$, a chloride ion concentration of 75 mg/L, a sulfate ion concentration of 75 mg/L, and pH adjusted to 7.9.

The material used in the test was the same test piece made of SPCC (30 mm × 50 mm × 1 mm) as in Test Example 1. One test piece was dipped per 1L of the test water, and the same corrosion test as in Test Example 1 was conducted. The test results were assessed by determining the amount of decrease in corrosion from the difference in weight between before and after the test of the test piece, and calculating a corrosion rate (mm/y) according to the above expression (specific weight: 7.87 g/cm$^3$) for determining the corrosion rate (mm/y) of <Test Example 1>.

<Results>

In the case of using AA-based polymer 1, MA-based polymer 1, or iminodimalic acid alone, no favorable corrosion-preventing effect tended to be low (Comparative Example 2). By contrast, in the case of combined use of AA-based polymer 1 and iminodimalic acid, improvement in corrosion-preventing effect was observed (Example 1). The best corrosion-preventing effect was obtained in combined use of three agents including MA-based polymer 1 (Example 2). This result suggests that a combination of the (meth)acrylic acid-based polymer having a sulfone group (preferably an acrylic acid-based polymer having a sulfone group) and the anticorrosive organic acid compound, or a combination of the dicarboxylic acid-based polymer and the anticorrosive organic acid compound can exert a more favorable corrosion-preventing effect. The results further suggests that a combination of these three components, i.e., the (meth)acrylic acid-based polymer having a sulfone group, the dicarboxylic acid-based polymer, and the anticorrosive organic acid compound can exert a much better corrosion-preventing effect.

Table 4 Evaluation of corrosion-preventing effect by combination

| | (Meth)acrylic acid-based polymer (mg/L) | | Dicarboxylic acid-based polymer (mg/L) | | Organic acid (mg/L) | | Corrosion rate (mm/y) |
|---|---|---|---|---|---|---|---|
| Comparative Example 1 | AA-based polymer 1 | 5 | - | - | - | - | 1.27 |
| Comparative Example 2 | - | - | - | - | Iminodimalic acid | 10 | 0.85 |
| Comparative Example 3 | - | - | MA-based polymer 1 | 10 | - | - | 0.45 |
| Comparative Example 4 | AA-based polymer 1 | 5 | MA-based polymer 1 | 10 | - | - | 0.15 |
| Example 1 | AA-based polymer 1 | 5 | - | - | Iminodimalic acid | 10 | 0.10 |
| Example 2 | AA-based polymer 1 | 5 | MA-based polymer 1 | 5 | Iminodimalic acid | 5 | 0.02 |

AA-based polymer 1 (AA/AMPS copolymer 1), MA-based polymer 1 (MA/IB copolymer 1)

<Test Example 3>

<Approach>

A combination of the (meth)acrylic acid-based polymer, the dicarboxylic acid-based polymer, and the organic acid was assessed for its corrosion-preventing effect under water quality conditions different from those of Test Example 2. The same corrosion test as in Test Example 1 was conducted in Test Example 3.

Operational conditions involved a water temperature of 30°C, a testing period of 3 days, and a rotational speed of 150 rpm. The water quality conditions involved a calcium hardness of 530 mg/L as $CaCO_3$, an acid consumption (pH 4.8) of 225 mg/L as $CaCO_3$, a magnesium hardness 165 mg/L as $CaCO_3$, a chloride ion concentration of 260 mg/L, a sulfate ion concentration of 270 mg/L, and pH adjusted to 8.6. The material used in the test was the same test piece made of SPCC (30 mm $\times$ 50 mm $\times$ 1 mm) as in Test Example 1. One test piece was dipped per L of the test water, and the same corrosion test as in Test Example 1 was conducted. The test results were assessed by determining the amount of decrease in corrosion from the difference in weight between before and after the test of the test piece, and calculating a corrosion rate (mm/y) according to the above expression (specific weight: 7.87 $g/cm^3$) for determining the corrosion rate (mm/y) of <Test Example 1>.

<Results>

As compared with Test Example 2, a low corrosion rate was obtained as a whole, suggesting that the water quality itself was anticorrosive. Among others, a combination of three types (three components), i.e., AA-based polymer 1, MA-based polymer 1 or MA-based polymer 2, and iminodimalic acid, exhibited a particularly favorable corrosion-preventing effect. This result means that a favorable corrosion-preventing effect is exerted even if the type of the dicarboxylic acid-based polymer is changed. A combination of the (meth)acrylic acid-based polymer (preferably an acrylic acid-based polymer) having a sulfone group, the anticorrosive organic acid compound, and the dicarboxylic acid-based polymer (preferably a maleic acid-based polymer) is considered to exert a more favorable corrosion-preventing effect.

Table 5 Evaluation of corrosion-preventing effect by combination

| | (Meth)acrylic acid-based polymer (mg/L) | | Dicarboxylic acid-based polymer (mg/L) | | Organic acid (mg/L) | | Corrosion rate (mm/v) |
|---|---|---|---|---|---|---|---|
| Comparative Example 5 | AA-based polymer 1 | 5 | - | - | - | - | 0.15 |
| Comparative Example 6 | AA-based polymer 1 | 5 | MA-based polymer 1 | 10 | - | - | 0.11 |

(continued)

| Table 5 Evaluation of corrosion-preventing effect by combination | | | | | | | |
|---|---|---|---|---|---|---|---|
| | (Meth)acrylic acid-based polymer (mg/L) | | Dicarboxylic acid-based polymer (mg/L) | | Organic acid (mg/L) | | Corrosion rate (mm/v) |
| Example 3 | AA-based polymer 1 | 5 | - | - | Iminodimalic acid | 10 | 0.08 |
| Example 4 | AA-based polymer 1 | 5 | DCA-based polymer 1 | 5 | Iminodimalic acid | 5 | 0.05 |
| Example 5 | AA-based polymer 1 | 5 | DCA-based polymer 2 | 5 | Iminodimalic acid | 5 | 0.04 |
| Example 6 | AA-based polymer 1 | 5 | DCA-based polymer 3 | 5 | Iminodimalic acid | 5 | 0.06 |
| AA-based polymer 1 (AA/AMPS copolymer 1), DCA-based polymer 1 (MA-based polymer 1) (MA/IB copolymer 1) DCA-based polymer 2 (MA-based polymer 2) (MA monopolymer 2) DCA-based polymer 3 (ESA-based polymer) | | | | | | | |

<Test Example 4>

<Approach>

In the combination of the (meth)acrylic acid-based polymer, the dicarboxylic acid-based polymer, and the anticorrosive organic acid compound, the (meth)acrylic acid-based polymer is considered to maintain water quality and contribute to scale prevention as a dispersant. Therefore, the influence of the type of the (meth)acrylic acid-based polymer on the inhibition of precipitation of test water was assessed. The water quality of the test water was adjusted to a calcium hardness of 300 mg/L as $CaCO_3$ and pH 8.5, and the test water was dipped in a hot water bath of 90°C for 1 hour. The turbidity of the aqueous solution thus tested was confirmed.

<Results>

Use of the (meth)acrylic acid-based polymer having a sulfone group was confirmed to suppress the precipitation of the test water. Thus, use of the (meth)acrylic acid-based polymer having a sulfone group can be expected to achieve scale prevention on a heat transfer surface and contribute to maintaining the concentration of a corrosion inhibitor in a water system including the heat transfer surface. This result suggested that a combination of the (meth)acrylic acid-based polymer having a sulfone group and the anticorrosive organic acid compound exerts a more favorable corrosion-preventing effect and can also exert a more favorable scale-preventing effect. The result further suggested that a combination of these three components, i.e., the (meth)acrylic acid-based polymer having a sulfone group, the dicarboxylic acid-based polymer (preferably a maleic acid-based polymer), and the anticorrosive organic acid compound, can exert a much better corrosion-preventing effect and can also exert a more favorable scale-preventing effect.

| Table 6 Evaluation of scale-preventing effect of (meth)acrylic acid-based polymer | | | | | | | |
|---|---|---|---|---|---|---|---|
| | (Meth)acrylic acid-based polymer(mg/L) | | Dicarboxylic acid-based polymer (mg/L) | | Organic acid(mg/L) | | Turbidity |
| Reference Example 1 | AA-based polymer 4 | 8 | MA-based polymer 1 | 8 | Iminodimalic acid | 8 | Present |
| Reference Example 2 | AA-based polymer 5 | 8 | MA-based polymer 1 | 8 | Iminodimalic acid | 8 | Present |
| Example 7 | AA-based polymer 1 | 8 | MA-based polymer 1 | 8 | Iminodimalic acid | 8 | Absent |
| Example 8 | AA-based polymer 2 | 8 | MA-based polymer 1 | 8 | Iminodimalic acid | 8 | Absent |

(continued)

| Table 6 Evaluation of scale-preventing effect of (meth)acrylic acid-based polymer | | | | | | | |
|---|---|---|---|---|---|---|---|
| | (Meth)acrylic acid-based polymer(mg/L) | | Dicarboxylic acid-based polymer (mg/L) | | Organic acid(mg/L) | | Turbidity |
| Example 9 | AA-based polymer 3 | 8 | MA-based polymer 1 | 8 | Iminodimalic acid | 8 | Absent |
| AA-based polymer 1 (AA/AMPS copolymer 1)<br>AA-based polymer 2 (AA/AMPS copolymer 2)<br>AA-based polymer 3 (AA/HAPS copolymer 3)<br>AA-based polymer 4 (AA monopolymer)<br>AA-based polymer 5 (AA/EA copolymer)<br>DCA-based polymer 1 (MA-based polymer 1) (MA/IB copolymer 1) | | | | | | | |

From the results described above, it was found that in a water system having a metallic material or the like in contact with the water system, combined use of an anticorrosive organic acid compound having an organic acid corrosion-preventing index at or beyond the predetermined level, and a polymer (particularly, one polymer which is a polymer having (meth)acrylic acid and sulfonic acid as monomers, or two or more different polymers which include a polymer having (meth) acrylic acid and sulfonic acid as monomers and a dicarboxylic acid-based polymer) can exert a synergistically much better corrosion-preventing action or effect through these two components or three components.

Specifically, it was found in a water system having a metallic material or the like in contact with the water system, combined use of at least two components, i.e., a polymer having (meth)acrylic acid and sulfonic acid as monomers and an anticorrosive organic acid compound having an organic acid corrosion-preventing effect index of 4 or more, can exert a more favorable metal anticorrosion treatment action for the water system and can also exert a more favorable scale-preventing action. It was further found that combined use of three components, i.e., a polymer having (meth)acrylic acid and sulfonic acid as monomers, a dicarboxylic acid-based polymer, and an anticorrosive organic acid compound having an organic acid corrosion-preventing effect index of 4 or more, can exert a much better metal anticorrosion treatment action for the water system and can also exert a much better scale-preventing action.

It was also found that an anticorrosive organic acid compound having an organic acid corrosion-preventing index at or beyond the predetermined level can be used for a polymer (particularly, one polymer which is a polymer having (meth) acrylic acid and sulfonic acid as monomers, or two or more different polymers which include a polymer having (meth)acrylic acid and sulfonic acid as monomers and a dicarboxylic acid-based polymer) to thereby enhance or improve the corrosion-preventing action or effect of the polymer to a synergistically much better corrosion-preventing action or effect.

The present inventors hypothesized the mechanism of corrosion-preventing action (hypothesis) according to the present embodiment as described below, though much still remains unknown. The present inventors further conducted diligent studies on this mechanism of action. The inventors believe that the anticorrosive organic acid compound acts on ions of iron and the like, thereby anticorrosively contributing to the formation of rust and suppressing the elution reaction of the metal in corrosion reaction. The inventors believe that the sulfonated (meth)acrylic acid-based polymer moderately keeps a dispersed state so as not to form scales of calcium conjugates, and maintains a corrosion-preventing effect. The inventors believe that the dicarboxylic acid-based polymer is bound to calcium to form a film on metal surface, thereby suppressing the reduction reaction of oxygen in corrosion reaction. The inventors further believe that in the case of combined use of the sulfonated (meth)acrylic acid-based polymer and the dicarboxylic acid-based polymer, the sulfonated (meth)acrylic acid-based polymer moderately keeps a dispersed state so as not to form scales of calcium conjugates with the dicarboxylic acid-based polymer, and maintains a more favorable corrosion-preventing effect.

As described above, the present inventors were able to provide a metal anticorrosion treatment method for a water system, which uses a copolymer of a (meth)acrylic acid monomer and a sulfonic acid-containing monomer, and an anticorrosive organic acid compound having an organic acid corrosion-preventing effect index of 4 or more, and more preferably which further uses a dicarboxylic acid-based polymer. The present inventors were also able to provide a metal anticorrosion treatment method for a water system or a metal corrosion inhibitor for a water system, which uses a copolymer of a (meth)acrylic acid monomer and a sulfonic acid-containing monomer, a dicarboxylic acid-based polymer, and an anticorrosive organic acid compound having an organic acid corrosion-preventing effect index of 4 or more.

These two components or three components mentioned above employ neither phosphorus compounds nor metal salt compounds. Therefore, the present method or the present agent is free from loads on water environment, such as eutrophication and aquatic toxicity ascribable to phosphorus compounds and/or metal salt compounds, and can significantly reduce loads on the whole water environment. Furthermore, these two components or three components mentioned above exert a favorable corrosion-preventing action or effect under water quality conditions of test water.

Therefore, the present method or the present agent is applicable to a wide water quality range, in consideration of the water quality conditions of test water.

Specifically, the present inventors were also able to achieve the object to provide a metal anticorrosion treatment method for a water system and a metal corrosion inhibitor for a water system, etc. which can exert a metal corrosion-preventing effect in a water system without using phosphorus compounds and/or metal salt compounds serving as loads on water environment, such as eutrophication and aquatic toxicity, and which is applicable to a wide water quality range. The present method or the present agent allows a phosphorus compound and/or a metal salt compound to be used in a water system with consideration given to reduction in loads on water environment.

In the present specification, description may be made with numbers, alphabets, and the like, such as "first, second, third, ...", "A, B, C, ...", or "primary, secondary, tertiary, ..." for the sake of convenience. However, the present invention should not thereby be limited or interpreted in a narrow sense as to an order or the like, and the order may be arbitrarily changed. In the present specification, the term "doing" such as "managing" may be interpreted as, for example, a method, a process, a unit, or a step of doing, and these terms may be appropriately interchanged with each other. For example, the "step" may be changed to "doing", a method, a process, or a unit, etc.; the "process" may be changed to "doing", a method, a step, or a unit, etc.; and the "unit" may be changed to "doing", a method, a process, or a step, etc. In the present specification, the "system" may be interpreted as a mechanism, an apparatus (or a device), a unit, or a part. The "mechanism" may be changed to a system, an apparatus (or a device), a unit, or a part; the "apparatus (or a device)" may be changed to a system, a mechanism, a unit, or a part; the "unit" may be changed to a mechanism, a system, an apparatus (or a device), or a part; and the "part" may be changed to a mechanism, a unit, an apparatus (or a device), or a system, or a mechanism, a unit, or an apparatus (or a device), or the like comprising the same. A combination product may be a combination.

Reference Signs List

1: open circulation cooling water system, 10: open cooling tower, 11: blast unit, 12: water spraying unit, 13: packing material region, 14: space, 15: pit, 16: makeup water supplying unit, 17: chemical agent injection unit, 18: looper, 20: circulating water channel, 21: transfer pump, 30: heat exchanger

**Claims**

1.

A metal anticorrosion treatment method for a water system, which uses
a copolymer of a (meth)acrylic acid monomer and a sulfonic acid-containing monomer, and
an anticorrosive organic acid compound having an organic acid corrosion-preventing effect index of 4 or more.

2. The method according to claim 1, which further uses a dicarboxylic acid-based polymer.

3. The method according to claim 1 or 2, wherein the anticorrosive organic acid compound is an organic acid compound having a carboxylic acid group.

4. The method according to claim 1 or 2, wherein the anticorrosive organic acid compound is an organic acid compound having a carboxylic acid group and a hydroxy group.

5. The method according to claim 1 or 2, wherein the anticorrosive organic acid compound is iminodimalic acid.

6. The method according to claim 2, wherein the dicarboxylic acid-based polymer is one or two or more selected from the group consisting of a maleic acid-based polymer and polyepoxysuccinic acid.

7. The method according to claim 1 or 2, wherein the method is an anticorrosion method for a water system for suppressing the corrosion of a metal which is in contact with the water system.

8.

A metal anticorrosion treatment agent for a water system, comprising
a copolymer of a (meth)acrylic acid monomer and a sulfonic acid-containing monomer, and
an anticorrosive organic acid compound having an organic acid corrosion-preventing effect index of 4 or more.

9. A metal anticorrosion treatment agent for a water system, comprising

   (A) a copolymer of a (meth)acrylic acid monomer and a sulfonic acid-containing monomer,
   (B) a dicarboxylic acid-based polymer, and
   (C) an anticorrosive organic acid compound having an organic acid corrosion-preventing effect index of 4 or more.

10. A water treatment agent, comprising at least any of

   (A) a copolymer of a (meth)acrylic acid monomer and a sulfonic acid-containing monomer,
   (B) a dicarboxylic acid-based polymer, and
   (C) an anticorrosive organic acid compound having an organic acid corrosion-preventing effect index of 4 or more,
   wherein

   (i) a combination of the component (A) and the component (C) or (ii) a combination of the components (A) to (C) is used when the water treatment agent is used in the metal anticorrosion treatment of a water system.

11. A water treatment agent, comprising an anticorrosive organic acid compound having an organic acid corrosion-preventing effect index of 4 or more, wherein
the water treatment agent is used for enhancing the metal anticorrosion treatment of a water system (i) with a copolymer of a (meth)acrylic acid monomer and a sulfonic acid-containing monomer or (ii) with a copolymer of a (meth)acrylic acid monomer and a sulfonic acid-containing monomer and a dicarboxylic acid-based polymer.

12. A method for enhancing the metal anticorrosion treatment of a water system (i) with a copolymer of a (meth)acrylic acid monomer and a sulfonic acid-containing monomer or (ii) with a copolymer of a (meth)acrylic acid monomer and a sulfonic acid-containing monomer and a dicarboxylic acid-based polymer,
wherein the method uses an anticorrosive organic acid compound having an organic acid corrosion-preventing effect index of 4 or more.

# Fig. 1

## INTERNATIONAL SEARCH REPORT

International application No.

**PCT/JP2022/044725**

| A. | CLASSIFICATION OF SUBJECT MATTER |
|---|---|

*C23F 11/12*(2006.01)i; *C23F 11/173*(2006.01)i
FI: C23F11/173; C23F11/12 101

According to International Patent Classification (IPC) or to both national classification and IPC

| B. | FIELDS SEARCHED |
|---|---|

Minimum documentation searched (classification system followed by classification symbols)

C23F11/12; C23F11/173

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

| C. | DOCUMENTS CONSIDERED TO BE RELEVANT | | |
|---|---|---|---|
| Category* | Citation of document, with indication, where appropriate, of the relevant passages | | Relevant to claim No. |
| X | JP 2012-507627 A (GENERAL ELECTRIC COMPANY) 29 March 2012 (2012-03-29) paragraphs [0009]-[0010], [0029]-[0033], [0046]-[0052], table 3 | | 1-12 |
| X | JP 2009-138226 A (HAKUTO CO., LTD.) 25 June 2009 (2009-06-25) paragraphs [0001], [0005]-[0006], [0049]-[0083], table 2 | | 1-3, 6-12 |
| X | JP 60-59080 A (KURITA WATER IND. LTD.) 05 April 1985 (1985-04-05) claims, examples 1, 2 table | | 1, 3-4, 7-8, 10-12 |
| X | JP 6-240477 A (W R GRACE & CO CONNECTICUT) 30 August 1994 (1994-08-30) paragraphs [0010]-[0012], [0024] | | 1, 3-4, 7-8, 10-12 |
| X | JP 62-95200 A (HAKUTOU KAGAKU KK) 01 May 1987 (1987-05-01) page 3, upper left column, lines 5-9, example 3, table 1 | | 1, 3, 7-8, 10-12 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/044725**

| Patent document cited in search report | | | Publication date (day/month/year) | Patent family member(s) | | | Publication date (day/month/year) |
|---|---|---|---|---|---|---|---|
| JP | 2012-507627 | A | 29 March 2012 | WO | 2010/062461 | A1 | |
| | | | | paragraphs [0008]-[0009], [0023]-[0025], [0034]-[0040], table 3 | | | |
| | | | | US | 2010/0111756 | A1 | |
| | | | | EP | 2347034 | A1 | |
| | | | | CA | 2740635 | A | |
| | | | | CN | 102203322 | A | |
| | | | | KR | 10-2011-0081324 | A | |
| | | | | MX | 2011004609 | A | |
| | | | | ZA | 201103585 | B | |
| JP | 2009-138226 | A | 25 June 2009 | (Family: none) | | | |
| JP | 60-59080 | A | 05 April 1985 | (Family: none) | | | |
| JP | 6-240477 | A | 30 August 1994 | US | 5344590 | A | |
| | | | | column 2, lines 33-59, column 5, lines 14-27 | | | |
| | | | | EP | 609590 | A1 | |
| | | | | AU | 5229393 | A | |
| | | | | BR | 9400014 | A | |
| | | | | ZA | 9309357 | A | |
| | | | | CA | 2112642 | A | |
| | | | | MX | 9400176 | A | |
| | | | | KR | 10-1994-0018482 | A | |
| | | | | ZA | 939357 | B | |
| JP | 62-95200 | A | 01 May 1987 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4033868 B
- WO 2010062461 A